(19) **Europäisches Patentamt European Patent Office Office européen des brevets**

(11) **EP 4 564 691 A1**

(12) **EUROPEAN PATENT APPLICATION**
published in accordance with Art. 153(4) EPC

(43) Date of publication:
**04.06.2025 Bulletin 2025/23**

(21) Application number: **22952574.6**

(22) Date of filing: **29.07.2022**

(51) International Patent Classification (IPC):
**H04B 7/0452** (2017.01)

(52) Cooperative Patent Classification (CPC):
**H04B 7/0452**

(86) International application number:
**PCT/CN2022/109258**

(87) International publication number:
**WO 2024/021129 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **ZHANG, Zhenyu**
  **Beijing 100085 (CN)**
• **GAO, Xueyuan**
  **Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **CODEWORD DETERMINATION METHOD FOR 8-ANTENNA-PORT MULTI-ANTENNA PANEL OF UPLINK MIMO TRANSMISSION, AND APPARATUS THEREFOR**

(57) Disclosed in the embodiments of the present application are a codeword determination method for 8-antenna-port multi-antenna panel of uplink **MIMO** transmission, and an apparatus therefor, which can be used in a communication system. The method comprises: determining a candidate codebook for a 4-antenna-port and/or 2-antenna-port corresponding to uplink **MIMO** transmission; and determining panel configuration information of an 8-antenna port multi-antenna panel of uplink **MIMO** transmission; and on the basis of the candidate codebook and the panel configuration information, determining codewords of the L layers of the 8-antenna-port multi-antenna panel. In the embodiments of the present application, high-dimensional 8-antenna-port antenna full-coherent transmission codewords can be constructed on the basis of low-dimensional antenna full-coherent transmission codewords, such that the requirements of the uplink **MIMO** supporting one layer to eight layers of transmission for the 8-antenna-port can be satisfied, thereby further enhancing the uplink **MIMO** technology.

```
┌─────────────────────────────────────────────────────────────────────┐
│ a candidate codebook for 4 antenna ports and/or a candidate codebook  │   S201
│ for 2 antenna ports for the uplink MIMO transmission is determined     │
└─────────────────────────────────────────────────────────────────────┘
                              │
                              ▼
┌─────────────────────────────────────────────────────────────────────┐
│ panel configuration information for the 8-antenna port multiple-antenna│   S202
│ panel for the uplink MIMO transmission is determined.                  │
└─────────────────────────────────────────────────────────────────────┘
                              │
                              ▼
┌─────────────────────────────────────────────────────────────────────┐
│ a codeword for L layers of 8 antenna ports for the uplink MIMO         │   S203
│ transmission is determined based on the candidate codebook(s) and the  │
│ panel configuration information                                        │
└─────────────────────────────────────────────────────────────────────┘
```

FIG. 2

**Description**

**FIELD**

The present disclosure relates to the field of communication technologies, and more particularly to a codeword determination method and a codeword determination device for 8 antenna ports multiple antenna panels for uplink multiple input multiple output (Multiple Input Multiple Output, MIMO) transmission.

**BACKGROUND**

The precoding technology in MIMO systems can effectively reduce interference and system overhead and improve system capacity, which is an extremely crucial key technology in the MIMO systems. In MIMO systems based on codebook transmission, codebook design is an important part of the precoding technology. The maximum number of antenna ports supported by a conventional codeword for antenna full coherence transmission of uplink MIMO transmission is 4, that is, the conventional codeword for antenna full coherence transmission of uplink MIMO only supports transmission on up to 4 layers with a maximum of 4 antenna ports. In a case that the antenna ports for uplink MIMO transmission are enhanced, for example, increased to 8 antenna ports, transmission requirements for the enhanced antenna ports cannot be met.

**SUMMARY**

Embodiments of the present disclosure provide a codeword determination method and a codeword determination device for 8 antenna ports multiple antenna panels for uplink MIMO transmission. Based on low-dimensional transmission codewords, a high-dimensional codeword for 8 antenna ports multiple-panel is constructed, which can enable uplink MIMO to support requirements for transmission on 1 layer to 8 layers of 8 antenna ports, thereby further enhancing the uplink MIMO technology.

In a first aspect, embodiments of the present disclosure provide a codeword determination method for 8 antenna ports multiple antenna panels for uplink MIMO transmission, including:

determining a candidate codebook for 4 antenna ports and/or a candidate codebook for 2 antenna ports for the uplink MIMO transmission;

determining panel configuration information for the 8 antenna ports multiple antenna panels for the uplink MIMO transmission; and

determining a codeword for L layers of the 8 antenna ports multiple antenna panels based on the candidate codebook(s) and the panel configuration information, where L is less than or equal to 8.

In the embodiments of the present disclosure, the candidate codebook for 4 antenna ports and/or the candidate codebook for 2 antenna ports for the uplink MIMO transmission are determined, and the panel configuration information for the 8 antenna ports multiple antenna panels for the uplink MIMO transmission is determined; and the codeword for L layers of the 8 antenna ports multiple antenna panels is determined based on the candidate codebook(s) and the panel configuration information. In the embodiments of the present disclosure, the high-dimensional transmission codeword for 8 antenna ports multiple-panel can be constructed based on the low-dimensional transmission codewords, which can enable uplink MIMO to support requirements for transmission on 1 layer to 8 layers of 8 antenna ports, thereby further enhancing the uplink MIMO technology.

In a second aspect, embodiments of the present disclosure provide a communication device, which has some or all of functions of a terminal device implementing the method described in the first aspect. For example, functions of the communication device may include functions of some or all of the embodiments in the present disclosure, and may include functions of implementing any one of the embodiments in the present disclosure alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

As an example, the processing module may be a processor, the reception and transmission module may be a transceiver or a communication interface, and the storage module may be a memory.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

In a third aspect, embodiments of the present disclosure provide a communication device, which includes a processor. When the processor calls a computer program in a memory, the method described in the first aspect is performed.

In a fourth aspect, embodiments of the present disclosure provide a communication device, including a processor and a memory, where the memory is configured to store a computer program; the processor is configured to execute the computer program stored in the memory to cause the communication device to perform the method described in the first aspect.

In a fifth aspect, embodiments of the present disclosure provide a communication device, including a processor and an interface circuit, where the interface circuit is configured to receive code instructions and transmit them to the processor, and the processor is configured to execute the code instructions to cause the device to perform the method described in the first aspect.

In a sixth aspect, embodiments of the present disclosure provide a computer readable storage medium, configured to store instructions used by the terminal device described above, and when the instructions are executed, the terminal device is caused to perform the method described in the first aspect.

In a seventh aspect, the present disclosure further provides a computer program product including a computer program, which, when executed on a computer, causes the computer to perform the method described in the first aspect.

In an eighth aspect, the present disclosure provides a chip system, including at least one processor and an interface, for supporting a terminal device to implement functions involved in the first aspect, such as determining or processing at least one of data or information involved in the above method. In a feasible design, the chip system further includes a memory, and the memory is configured to store a computer program and data needed by the terminal device. The chip system may be formed by chips, or may include chips and other discrete devices.

In a ninth aspect, the present disclosure provides a computer program, which, when executed on a computer, causes the computer to perform the method described in the first aspect.

## BRIEF DESCRIPTION OF THE DRAWINGS

To better clarify technical solutions of embodiments of the present disclosure or the background, drawings used in the embodiments of the present disclosure or the background are described hereinafter.

FIG. 1 is a schematic diagram of an architecture of a communication system according to an embodiment of the present disclosure;

FIG. 2 is a flow chart of a codeword determination method for 8 antenna ports multiple antenna panels for uplink MIMO transmission according to an embodiment of the present disclosure;

FIG. 3 is a flow chart of another codeword determination method for 8 antenna ports multiple antenna panels for uplink MIMO transmission according to an embodiment of the present disclosure;

FIG. 4 is a flow chart of another codeword determination method for 8 antenna ports multiple antenna panels for uplink MIMO transmission according to an embodiment of the present disclosure;

FIG. 5 is a flow chart of another codeword determination method for 8 antenna ports multiple antenna panels for uplink MIMO transmission according to an embodiment of the present disclosure;

FIG. 6 is a flow chart of another codeword determination method for 8 antenna ports multiple antenna panels for uplink MIMO transmission according to an embodiment of the present disclosure;

FIG. 7 is a flow chart of another codeword determination method for 8 antenna ports multiple antenna panels for uplink MIMO transmission according to an embodiment of the present disclosure;

FIG. 8 is a flow chart of another codeword determination method for 8 antenna ports multiple antenna panels for uplink MIMO transmission according to an embodiment of the present disclosure;

FIG. 9 is a flow chart of another codeword determination method for 8 antenna ports multiple antenna panels for uplink MIMO transmission according to an embodiment of the present disclosure;

FIG. 10 is a schematic diagram of a flow chart of a codebook-based uplink transmission method according to an embodiment of the present disclosure;

FIG. 11 is a schematic diagram of a flow chart of another codebook-based uplink transmission method according to an embodiment of the present disclosure;

FIG. 12 is a structural diagram of a communication device according to an embodiment of the present disclosure;

FIG. 13 is a structural diagram of a communication device according to an embodiment of the present disclosure; and FIG. 14 is a structural diagram of a chip according to an embodiment of the present disclosure.

## DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the present disclosure. Rather, they are merely examples of devices and methods consistent with some aspects of the present disclosure as recited in the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expression "if" used herein may be interpreted as "in a case that" or "when" or "in response to determining". For the purpose of brevity and ease of understanding, terms used herein to characterize size relationships are "greater than", "less than", "higher than" or "lower than". However, it can be understood by those skilled in the art that the term "greater than" covers the meaning of "greater than or equal to", and the term "less than" covers the meaning of "less than or equal to"; the term "higher than" covers the meaning of "higher than or equal to", and the term "lower than" covers the meaning of "lower than or equal to".

For ease of understanding, terms involved in the present disclosure are first introduced.

A physical uplink shared channel (Physical Uplink Shared Channel, PUSCH) is used to carry data from a transport channel PUSCH.

Coherence transmission is defined as a capability of a UE. The coherence transmission capability of the UE includes the following.

Full Coherence Transmission: all antenna ports can transmit coherently.

Partial Coherence transmission: antenna ports in the same coherent transmission group can transmit coherently, and antenna ports in different coherent transmission groups can not transmit coherently, where each coherence transmission group includes at least two antenna ports.

Non-coherence transmission: no antenna port can transmit coherently.

Based on the codeword determination method for 8 antenna ports multiple antenna panels for uplink MIMO transmission in the embodiments of the present disclosure, a codeword for antenna full coherence transmission applicable to a communication system is determined. The communication system to which the embodiments of the present disclosure are applicable is first described hereinafter.

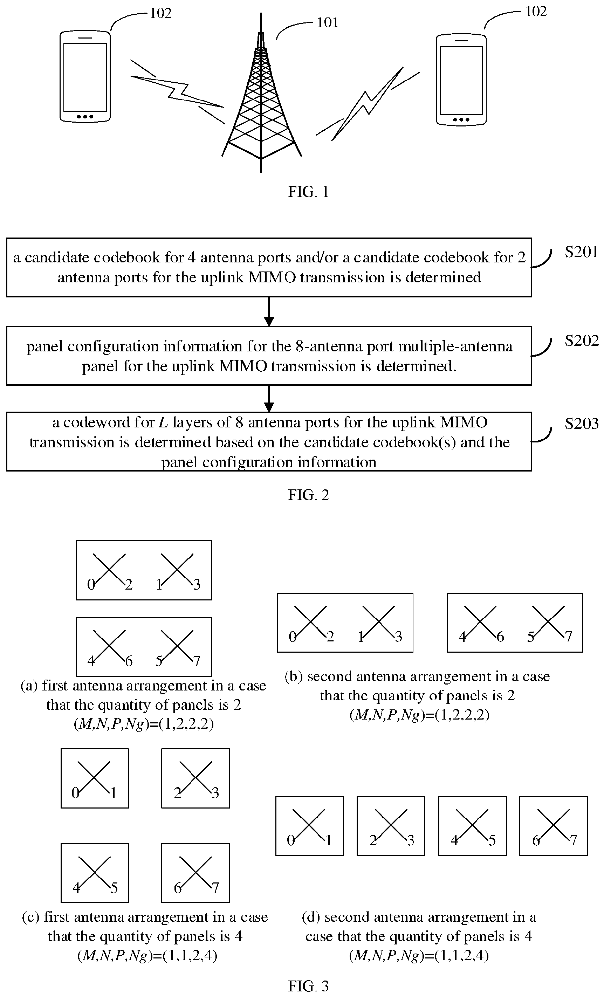

Reference is made to FIG. 1, which is a schematic diagram of an architecture of a communication system according to embodiments of the present disclosure. The communication system may include, but is not limited to, one network device and one terminal device. The number and forms of devices shown in FIG. 1 are only for examples and do not constitute a limitation on the embodiments of the present disclosure. In actual applications, two or more than two network devices and two or more than two terminal devices may be included. In FIG. 1, a case where the communication system includes one network device 101 and one terminal device 102 is taken as an example.

It should be noted that the technical solutions of the embodiments of the present disclosure can be applied to various communication systems, such as a long term evolution (Long Term Evolution, LTE) system, a 5th generation (5th Generation, 5G) mobile communication system, a 5G new radio (New Radio, NR) system, or other new mobile communication systems in the future. It should also be noted that a sidelink in the embodiments of the present disclosure may also be called a side link or a direct link.

The network device 101 in the embodiments of the present disclosure is an entity on a network side for transmitting or receiving signals. For example, the network device 101 may be an evolved NodeB (evolved NodeB, eNB), a transmission reception point (Transmission Reception point, TRP), a next generation NodeB (next generation NodeB, gNB) in an NR system, a base station in other mobile communication systems in the future, or an access node in a wireless fidelity (Wireless Fidelity, WiFi) system, etc. The specific technologies and the specific device form used by the network device are not limited in the embodiments of the present disclosure. The network device according to the embodiments of the present disclosure may include a central unit (Central Unit, CU) and a distributed unit (Distributed Unit, DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal device 102 in the embodiments of the present disclosure is an entity on a user side for receiving or transmitting signals, such as a mobile phone. The terminal device may also be referred to as a terminal (Terminal), a user equipment (User Equipment, UE), a mobile station (Mobile Station, MS), a mobile terminal (Mobile Terminal, MT), etc. The terminal device may be a car with a communication function, a smart car, a mobile phone, a wearable device, a tablet computer (Pad), a computer with a wireless reception and transmission function, a virtual reality (Virtual Reality, VR) terminal device, an augmented reality (Augmented Reality, AR) terminal device, a wireless terminal device in industrial control (industrial control), a wireless terminal device in self-driving (Self-driving), a wireless terminal device in a remote medical surgery (Remote medical surgery), a wireless terminal device in a smart grid (Smart Grid), a wireless terminal device in transportation safety (Transportation Safety), a wireless terminal device in a smart city (Smart City), a wireless terminal device in a smart home (Smart Home), etc. The specific technologies and the specific device form used by the terminal device are not limited in the embodiments of the present disclosure.

In sidelink communication, there are 4 sidelink transmission modes. Sidelink transmission mode 1 and sidelink transmission mode 2 are used for a device-to-device (Device-To-Device, D2D) communication of the terminal device. Sidelink transmission mode 3 and sidelink transmission mode 4 are used for V2X communication. In a case that sidelink transmission mode 3 is adopted, resource allocation is scheduled by the network device 101. Specifically, the network device 101 may transmit resource allocation information to the terminal device 102, and then the terminal device 102 allocates resources for another terminal device, so that the other terminal device may transmit information to the network device 101 through the allocated resources. In V2X communication, a terminal device with better signals or higher reliability may be used as the terminal device 102. A first terminal device mentioned in the embodiments of the present disclosure may refer to the terminal device 102, and a second terminal device may refer to the another terminal device.

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

It should be noted that the codeword determination method for the 8 antenna ports multiple antenna panels for the uplink MIMO transmission provided in any embodiment of the present disclosure may be performed alone, or in combination with feasible implementations in other embodiments, or in combination with any technical solution in the related technologies.

The codeword determination method and the device for the 8 antenna ports multiple antenna panels for the uplink MIMO transmission provided by the present disclosure are described in detail hereinafter in conjunction with the drawings.

Reference is made to FIG. 2, which is a flow chart of a codeword determination method for 8 antenna ports multiple antenna panels for uplink MIMO transmission according to embodiments of the present disclosure. As shown in FIG. 2, the method may include but is not limited to the following steps.

S201: a candidate codebook for 4 antenna ports and/or a candidate codebook for 2 antenna ports for the uplink MIMO transmission is determined.

As transmission requirements and transmission scenarios increase, uplink transmission can support increased antenna ports and uplink transmission layers. That is, a number of antenna ports may be increased from 4 antenna ports to a maximum of 8 antenna ports, and correspondingly, a number of uplink transmission layers may be changed from 4 layers to $L$ layers, for example, the value of $L$ may be 1 to 8.

Optionally, the number of antenna ports for uplink transmission and the number of uplink transmission layers $L$ may be equal or unequal.

In the present disclosure, there is no limitation on the manner of determining the candidate codebook for 4 antenna ports and the candidate codebook for 2 antenna ports, which may be determined based on actual conditions.

Optionally, the candidate codebook for 4 antenna ports may be a uplink precoding codebook for 4 antenna ports for uplink MIMO transmission agreed in the 3GPP communication protocol; the candidate codebook for 2 antenna ports may be a uplink precoding codebook for 2 antenna ports for uplink MIMO transmission agreed in the 3GPP communication protocol. Optionally, the candidate codebook for 4 antenna ports may be a downlink precoding codebook for 4 antenna ports for downlink MIMO transmission agreed in the 3GPP communication protocol; the candidate codebook for 2 antenna ports may be a downlink precoding codebook for 2 antenna ports for downlink MIMO transmission agreed in the 3GPP communication protocol.

Optionally, the candidate codebook for 4 antenna ports may be determined based on a 4-dimensional orthogonal codebook, such as a Kerdock codebook. Optionally, the candidate codebook for 2 antenna ports may be determined based on a 2-dimensional orthogonal codebook, such as a Kerdock codebook. It should be noted that the Kerdock codebook is an orthogonal codebook used in communication system design and may be used to construct mutually unbiased base sequences. The Kerdock codebook has orthogonality, that is, any two column vectors in each Kerdock codeword are orthogonal to each other.

Optionally, they may include a pre-configured candidate codebook for 4 antenna ports and a pre-configured candidate codebook for 2 antenna ports.

S202: panel configuration information for the 8 antenna ports multiple antenna panels for the uplink MIMO transmission is determined.

S203: a codeword for L layers of 8 antenna ports for the uplink MIMO transmission is determined based on the candidate codebook(s) and the panel configuration information.

Optionally, the panel configuration information for the 8 antenna ports multiple antenna panels may include a number of antenna panels and transmission coherence between the antenna panels.

It should be noted that the number of the antenna panels may be used to determine a candidate codebook for constructing a codebook for the 8 antenna ports multiple antenna panels from the candidate codebook for 4 antenna ports and the candidate codebook for 2 antenna ports. In embodiments of the present disclosure, the candidate codebook for constructing the codebook for the 8 antenna ports multiple antenna panels may be referred to as a first candidate codebook. This definition is applicable to each embodiment in this disclosure and will not be further provided in the following. Optionally, the number of the antenna panels may be 2 or 4. Reference is made to FIG. 3, which illustrates different antenna arrangements for given quantities of panels, and the codeword is applicable to the corresponding number of panels.

The transmission coherence between the antenna panels may be used to determine the codeword for constructing the codebook for the 8 antenna ports multiple antenna panels from the first candidate codebook. Optionally, the transmission coherence between the antenna panels may be one of full coherence transmission between the antenna panels, non-coherence transmission between the antenna panels, partial coherence transmission between the antenna panels, or partial coherence transmission between antenna ports in different antenna panels.

Optionally, the panel configuration information for the 8 antenna ports multiple antenna panels may be determined by the antenna structure of the terminal device.

It should be noted that $L$ is used to represent a maximum number of transmission layers of the uplink MIMO transmission supported by the terminal device. The value of $L$ is a positive integer, and $L$ is less than or equal to 8.

In the embodiments of the present disclosure, after the first candidate codebook is determined, the codeword for L layers of the 8 antenna ports multiple antenna panels may be obtained by concatenating based on a codeword of a specified type or any codeword in the first candidate codebook. Optionally, the codeword determined from the first candidate codebook for concatenation may be any codeword or a full coherence codeword. Optionally, one or two codewords may be selected from the first candidate codebook and concatenated to obtain the codeword for L layers of the 8 antenna ports multiple antenna panels.

For example, in a case that the transmission coherence of the antenna panels is full coherence transmission between the antenna panels, a full coherence codeword may be selected from the first candidate codebook, and the codeword for L layers of the 8 antenna ports multiple antenna panels may be obtained by concatenating based on the selected full coherence codeword.

For another example, in a case that the transmission coherence of the antenna panels is one of non-coherence transmission between the antenna panels, partial coherence transmission between the antenna panels, or partial coherence transmission between antenna ports in different antenna panels, any codeword may be selected from the first candidate codebook, and the codeword for L layers of the 8 antenna ports multiple antenna panels may be obtained by concatenating based on the selected arbitrary codeword.

In embodiments of the present disclosure, the candidate codebook for 4 antenna ports or the candidate codebook for 2 antenna ports for the uplink MIMO transmission is determined. Based on the candidate codebook for 4 antenna ports or the candidate codebook for 2 antenna ports, and the configuration information about the antenna panels, the transmission codeword for L layers of the 8 antenna ports multiple antenna panels may be determined. In the embodiments of the present disclosure, the high-dimensional codeword for the 8 antenna ports multiple antenna panels can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

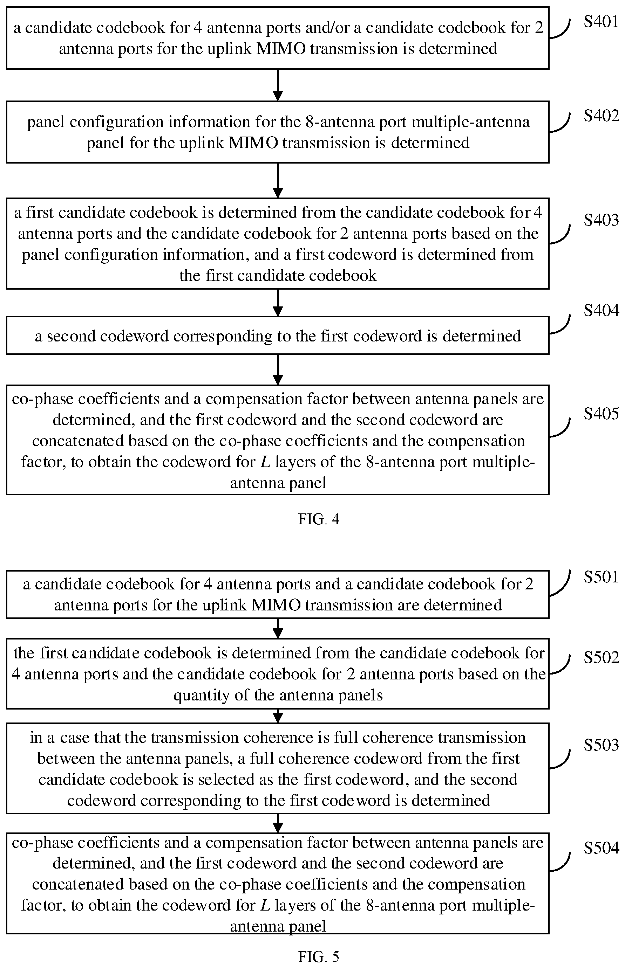

Reference is made to FIG. 4, which is a flow chart of a codeword determination method for 8 antenna ports multiple antenna panels for uplink MIMO transmission according to embodiments of the present disclosure. As shown in FIG. 4, the method may include but is not limited to the following steps.

S401: a candidate codebook for 4 antenna ports and/or a candidate codebook for 2 antenna ports for the uplink MIMO transmission is determined.

S402: panel configuration information for the 8 antenna ports multiple antenna panels for the uplink MIMO transmission is determined.

For a detailed description of steps S401 to S402, reference is made to the relevant contents in the above embodiments, which will not be further described herein.

S403: a first candidate codebook is determined from the candidate codebook for 4 antenna ports and the candidate codebook for 2 antenna ports based on the panel configuration information, and a first codeword is determined from the first candidate codebook.

S404: a second codeword corresponding to the first codeword is determined.

Optionally, the panel configuration information for the 8 antenna ports multiple antenna panels may include a number of antenna panels and transmission coherence between the antenna panels.

It should be noted that the number of the antenna panels may be used to select the first candidate codebook from the candidate codebook for 4 antenna ports and the candidate codebook for 2 antenna ports. For example, the number of the antenna panels may be 2 or 4. In a case that the number of the antenna panels is 2, the first candidate codebook is the candidate codebook for 4 antenna ports; in a case that the number of the antenna panels is 4, the first candidate codebook is the candidate codebook for 2 antenna ports.

The transmission coherence between the antenna panels may be used to determine the first codeword and/or the second codeword from the first candidate codebook. The first codeword and/or the second codeword is used to construct the codeword for the 8 antenna ports multiple antenna panels. Optionally, the transmission coherence between the antenna panels may be one of full coherence transmission between the antenna panels, non-coherence transmission between the antenna panels, partial coherence transmission between the antenna panels, or partial coherence transmission between antenna ports in different antenna panels.

Optionally, the panel configuration information for the 8 antenna ports multiple antenna panels may be determined based on the antenna structure of the terminal device.

Optionally, one first codeword may be determined from the first candidate codebook, and further, the second codeword may be determined based on the first codeword. For example, a portion of column vectors in the first codeword may be selected to generate the second codeword. For another example, the first codeword may be directly determined as the second codeword. Optionally, one first codeword and one second codeword may be determined from the first candidate codebook, that is, the first codeword and the second codeword are both codewords selected from the first candidate codebook.

S405: co-phase coefficients and a compensation factor between antenna panels are determined, and the first codeword and the second codeword are concatenated based on the co-phase coefficients and the compensation factor, to obtain the codeword for L layers of the 8 antenna ports multiple antenna panels.

**In** embodiments of the present disclosure, the co-phase coefficients and the compensation coefficient between the antenna panels are designed for the concatenating process. Based on the co-phase coefficients and the compensation coefficient, the first codeword and the second codeword are concatenated to obtain the codeword for L layers of the 8 antenna ports multiple antenna panels. The co-phase coefficients may be determined based on a co-phase coefficient capability supported by the communication device, which may include phase angle of $90°(\varphi = j)$, $180°(p = -1)$, $270°(\varphi = -j)$. In addition, more phase angles may be supported, for example, more phase angles may be determined according to an angle interval of 45°.

Optionally, the co-phase coefficients and the compensation factor of the antenna panels may be determined based on the antenna structure type of the terminal device. The terminal device may determine the co-phase coefficients and the compensation factor by itself; or, it may report the antenna structure type, and the network device may transmit the co-phase coefficients and the compensation factor to the terminal device based on the antenna structure type.

After the co-phase coefficients and the compensation factor are determined, a coefficient matrix for concatenating may be constructed based on the co-phase coefficients and the compensation factor. Furthermore, the first codeword and the second codeword determined based on the first candidate codebook are concatenated to obtain a concatenated codeword. After the coefficient matrix and the concatenated codeword are determined, a matrix dot product operation may be performed on the coefficient matrix and the concatenated codeword to generate the codeword for $L$ layers of the 8 antenna ports multiple antenna panels, where coefficients in the coefficient matrix are multiplied by block matrices at corresponding locations in the concatenated codeword.

As a feasible implementation, in a case that the first candidate codebook is the candidate codebook for 4 antenna ports and $4 < L \leq 8$, a first coefficient matrix may be determined based on the co-phase coefficients and the compensation factor, two first codewords are concatenated in a row dimension to generate a first concatenated codeword, and two second codewords are concatenated in a row dimension to generate a second concatenated codeword. After the first concatenated codeword and the second concatenated codeword are determined, the first concatenated codeword and the second concatenated codeword may be are concatenated in a column dimension to generate a third concatenated codeword. Further, a matrix dot product operation is performed on the first coefficient matrix and the third concatenated codeword to generate the codeword for L layers of the 8 antenna ports multiple antenna panels, where coefficients in the first coefficient matrix are multiplied by block matrices at corresponding locations in the third concatenated codeword.

As another feasible implementation, in a case that the first candidate codebook is the candidate codebook for 4 antenna ports and $1 \leq L \leq 4$, a second coefficient matrix may be determined based on the co-phase coefficients and the compensation factor, the first codeword and the second codeword are concatenated in a row dimension to generate a fourth concatenated codeword. Further, a matrix dot product operation is performed on the second coefficient matrix and the fourth concatenated codeword to generate the codeword for $L$ layers of the 8 antenna ports multiple antenna panels, where coefficients in the second coefficient matrix are multiplied by block matrices at corresponding locations in the fourth concatenated codeword.

As another feasible implementation, in a case that the first candidate codebook is the candidate codebook for 2 antenna ports and $4<L\leq8$, a third coefficient matrix may be determined based on the co-phase coefficients and the compensation factor; for first $2*(L-4)$ columns in $L$ columns, four first codewords are concatenated in a row dimension by using the first codeword as a block matrix, to generate a fifth concatenated codeword; for last $8-L$ columns in the $L$ columns, four second codewords are concatenated in a row dimension by using the second codeword as a block matrix, to generate a sixth concatenated codeword. After the fifth concatenated codeword and the sixth concatenated codeword are determined, the fifth concatenated codeword and the sixth concatenated codeword are concatenated in a column dimension to generate a seventh concatenated codeword; and a matrix dot product operation is performed on the third coefficient matrix and the seventh concatenated codeword to generate the codeword for L layers of the 8 antenna ports multiple antenna panels, where coefficients in the third coefficient matrix are multiplied by block matrices at corresponding locations in the seventh concatenated codeword.

As another feasible implementation, in a case that the first candidate codebook is the candidate codebook for 2 antenna ports and $1\leq L\leq4$, a fourth coefficient matrix may be determined based on the co-phase coefficients and the compensation factor. If $3\leq L\leq4$, four first codewords are concatenated in a row dimension to generate an eighth concatenated codeword, and four second codewords are concatenated in a row dimension to generate a ninth concatenated codeword. After the eighth concatenated codeword and the ninth concatenated codeword are determined, the eighth concatenated codeword and the ninth concatenated codeword are concatenated in a column dimension to generate a tenth concatenating codeword. Further, a matrix dot product operation is performed on the fourth coefficient matrix and the tenth concatenated codeword to generate the codeword for $L$ layers of the 8 antenna ports multiple antenna panels, where coefficients in the fourth coefficient matrix are multiplied by block matrices at corresponding locations in the tenth concatenated codeword. If $1\leq L\leq2$, two first codewords and the two second codewords are concatenated in a row dimension to generate an eleventh concatenated codeword. Further, a matrix dot product operation is performed on the fourth coefficient matrix and the eleventh concatenated codeword to generate the codeword for L layers of the 8 antenna ports multiple antenna panels, where coefficients in the fourth coefficient matrix are multiplied by block matrices at corresponding locations in the eleventh concatenated codeword.

In embodiments of the present disclosure, the candidate codebook for 4 antenna ports or the candidate codebook for 2 antenna ports for the uplink MIMO transmission is determined. Based on the candidate codebook for 4 antenna ports or the candidate codebook for 2 antenna ports, and the configuration information about the antenna panels, the transmission codeword for $L$ layers of the 8 antenna ports multiple antenna panels may be determined. In the embodiments of the present disclosure, the high-dimensional codeword for the 8 antenna ports multiple antenna panels can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

Reference is made to FIG. 5, which is a flow chart of a codeword determination method for 8 antenna ports multiple antenna panels for uplink MIMO transmission according to embodiments of the present disclosure. As shown in FIG. 5, the method may include but is not limited to the following steps.

S501: a candidate codebook for 4 antenna ports and a candidate codebook for 2 antenna ports for the uplink MIMO transmission are determined.

For a detailed description of step S501, reference is made to the relevant contents in the above embodiments, which will not be further described herein.

S502: the first candidate codebook is determined from the candidate codebook for 4 antenna ports and the candidate codebook for 2 antenna ports based on the number of the antenna panels.

For a detailed description of step S502, reference is made to the relevant contents in the above embodiments, which will not be further described herein.

S503: in a case that the transmission coherence is full coherence transmission between the antenna panels, a full coherence codeword from the first candidate codebook is selected as the first codeword, and the second codeword corresponding to the first codeword is determined.

As a first feasible implementation, in a case that the first candidate codebook is the candidate codebook for 4 antenna ports and $5\leq L\leq8$, a full coherence codeword for $\lceil L/2 \rceil$ layers of 4 antenna ports is determined as the first codeword; and $\lfloor L/2 \rfloor$ columns of vectors are selected from the first codeword to generate the second codeword.

As a second feasible implementation, in a case that the first candidate codebook is the candidate codebook for 4 antenna ports and $5\leq L\leq8$, a full coherence codeword for 4 layers of 4 antenna ports is determined as the first codeword;

and optionally, the first codeword is directly determined as the second codeword. Optionally, *L-4* columns of vectors are selected from the first codeword based on the *L* layers, to generate the second codeword.

As a third feasible implementation, in a case that the first candidate codebook is the candidate codebook for 4 antenna ports and $5 \le L \le 8$, a full coherence codeword for $\lceil L/2 \rceil$ layers of 4 antenna ports is determined as the first codeword; and a full coherence codeword for $\lfloor L/2 \rfloor$ layers of 4 antenna ports is determined as the second codeword.

As a fourth feasible implementation, in a case that the first candidate codebook is the candidate codebook for 4 antenna ports and $1 \le L \le 4$, a full coherence codeword for L layers of 4 antenna ports is determined as the first codeword; and the first codeword is determined as the second codeword.

As a fifth feasible implementation, in a case that the first candidate codebook is the candidate codebook for 2 antenna ports, a full coherence codeword for 2 layers of 2 antenna ports is determined as the first codeword; and a full coherence codeword for 1 layer of 2 antenna ports is determined as the second codeword.

S504: co-phase coefficients and a compensation factor between antenna panels are determined, and the first codeword and the second codeword are concatenated based on the co-phase coefficients and the compensation factor, to obtain the codeword for L layers of the 8 antenna ports multiple antenna panels.

For a detailed description of step S504, reference is made to the relevant contents in the above embodiments, which will not be further described herein.

In a case that the number of the antenna panels is 2, the first candidate codebook is the candidate codebook for 4 antenna ports. When the number of the transmission layers is $5 \le L \le 8$:

In the first implementation in the above, optionally, any full coherence codeword $W_{4, \lceil L/2 \rceil}$ for $\lceil L/2 \rceil$ layers of 4 antenna ports is determined as the first codeword; and any $\lfloor L/2 \rfloor$ columns of vectors from $W_{4, \lceil L/2 \rceil}$ are determined as the second codeword $W'_{4, \lceil L/2 \rceil}$, for example, the first $\lfloor L/2 \rfloor$ columns of vectors may be selected to generate the second codeword.

1, $\varphi$, -1, -$\varphi$ are co-phase coefficients, $\varphi_{p_1}$ is the compensation factor between the antenna panels. Based on the co-phase coefficients and the compensation factor between the antenna panels, the first coefficient matrix may be determined to be:

$$\Phi = \begin{bmatrix} 1 & 1 \\ \varphi\varphi_{p_1} & -\varphi\varphi_{p_1} \end{bmatrix} \quad \text{or} \quad \Phi = \begin{bmatrix} 1 & -1 \\ \varphi\varphi_{p_1} & \varphi\varphi_{p_1} \end{bmatrix}.$$

In the embodiments of the present disclosure, after the first codeword and the second codeword are determined, two first codewords may be concatenated in a row dimension to obtain the first concatenated codeword, and two second codewords may be concatenated in a row dimension to obtain the second concatenated codeword. Furthermore, the first concatenated codeword and the second concatenated codeword are concatenated in a column dimension to obtain the third concatenated codeword. In the embodiments of the present disclosure, a matrix point product operation is performed on the first coefficient matrix and the third concatenated codeword to generate the codeword for L layers of the 8 antenna ports multiple antenna panels. Coefficients in the first coefficient matrix are multiplied by block matrices at corresponding locations in the third concatenated codeword.

The codeword $W_{8,L}$ for *L* layers of the 8 antenna ports multiple-panel may be

$$W_{8,L} = \begin{bmatrix} W_{4, \lceil L/2 \rceil} & W'_{4, \lceil L/2 \rceil} \\ \varphi_{p_1}\varphi W_{4, \lceil L/2 \rceil} & -\varphi_{p_1}\varphi W'_{4, \lceil L/2 \rceil} \end{bmatrix} \quad \text{or} \quad W_{8,L} = \begin{bmatrix} W_{4, \lceil L/2 \rceil} & -W'_{4, \lceil L/2 \rceil} \\ \varphi_{p_1}\varphi W_{4, \lceil L/2 \rceil} & \varphi_{p_1}\varphi W'_{4, \lceil L/2 \rceil} \end{bmatrix}.$$

For example, L=7, the full coherence codeword for 4 layers of 4 antenna ports is the first codeword:

$$W_{4,4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}, \text{ and } W'_{4,4} = \begin{bmatrix} 1 & 1 & 1 \\ 1 & -1 & 1 \\ 1 & 1 & -1 \\ 1 & -1 & -1 \end{bmatrix}, \text{ where } W'_{4,4} \text{ is the first, second, and third columns of } W_{4,4},$$
and is the second codeword corresponding to the first codeword.

$\varphi = J$, $\varphi_{p_1} = -j$, and $\Phi = \begin{bmatrix} 1 & 1 \\ 1 & -1 \end{bmatrix}$, then the codeword for 7 layers of the 8 antenna ports multiple-panel is:

$$W_{8,7} = \begin{bmatrix} W_{4,4} & W'_{4,4} \\ W_{4,4} & -W'_{4,4} \end{bmatrix}.$$

It should be noted that when $L$ is an odd number of layers, based on the layer number $l$ of the first codeword, $l$ layers among $L$ layers are selected in an order from the first layer to the L-th layer (from front to back) or from the L-th layer to the first layer (from back to front), to keep the first codeword, where the value of $l$ is a positive integer less than or equal to 4. For example, when $L$ is an odd number of layers, and the first codeword is the candidate codeword for 4 layers of 4 antenna ports, the first 4 layers of the codeword selected from front to back may be determined to be the first codeword $W_{4,4}$, and the remaining 3 layers in the rear are determined by the second codeword, for example, the first three columns or the last three columns in $W'_{4,4}$ may be used. Or, the last four layers of the codeword selected from back to front may be determined to be the first codeword $W_{4,4}$, and the remaining three layers in the front may be determined by the second codeword, for example, the first three columns or the last three columns of $W'_{4,4}$ may be used.

In the second implementation in the above, optionally, any codeword for antenna full coherence transmission for 4 layers of 4 antenna ports is determined as the first codeword: $W_{4,4}$, and the second codeword is $W_{4,4}$.

$1, \varphi, -1, -\varphi$ are co-phase coefficients, $\varphi_{p_1}$ is the compensation factor between the antenna panels, then the first coefficient matrix is:

$$\Phi = \begin{bmatrix} 1 & 1 \\ \varphi\varphi_{p_1} & -\varphi\varphi_{p_1} \end{bmatrix} \quad \Phi = \begin{bmatrix} 1 & -1 \\ \varphi\varphi_{p_1} & \varphi\varphi_{p_1} \end{bmatrix}$$

or . In embodiments of the present disclosure, after the first codeword and the second codeword are determined, the first codeword and the second codeword may be concatenated to generate the codeword for L layers of the 8 antenna ports multiple antenna panels: $W_{8,L}$, where $W_{8,L}$ may be a matrix formed by any $L$ columns of vectors in $W_{8,8}$, that is, a matrix formed by any $L$ layers, such as the first $L$ columns, where

$$W_{8,8} = \begin{bmatrix} W_{4,4} & W_{4,4} \\ \varphi_{p_1}\varphi W_{4,4} & -\varphi_{p_1}\varphi W_{4,4} \end{bmatrix} \quad W_{8,8} = \begin{bmatrix} W_{4,4} & -W_{4,4} \\ \varphi_{p_1}\varphi W_{4,4} & \varphi_{p_1}\varphi W_{4,4} \end{bmatrix}$$

or . Any $L$ columns selected from $W_{8,8}$ form the codeword for L layers of 8 antenna ports. For the concatenation process of the first codeword and the second codeword, reference may be made to the relevant contents in the above embodiments, which will not be described in detail herein.

For example, L=7, a full coherence codeword for 4 layers of 4 antenna ports is

$$W_{4,4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ ; the

second codeword is $W_{4,4}$; $\varphi = j$, $\varphi_{p_1} = -j$,

$$\Phi = \begin{bmatrix} 1 & 1 \\ 1 & -1 \end{bmatrix}$$

, then the 1 -1 -1 1 codeword for 7 layers of the 8 antenna ports multiple-panel is a matrix formed by any 7 columns of vectors in

$$W_{8,8} = \begin{bmatrix} W_{4,4} & W'_{4,4} \\ W_{4,4} & -W'_{4,4} \end{bmatrix}$$

, for example, the first to seventh columns.

Optionally, based on the $L$ layers, $L$-4 columns of vectors are selected from the first codeword to generate the second codeword. That is, L-4 columns of vectors are selected from $W_{4,4}$ to generate the second codeword. For example, in a case that L=6, the first, second, and third columns of $W_{4,4}$ may be selected to form the second codeword corresponding to the first codeword. For the concatenation process of the first codeword and the second codeword, reference may be made to the relevant contents in the above embodiments, which will not be described in detail herein.

It should be noted that when $L$ is an odd number of layers, based on the layer number $l$ of the first codeword, $l$ layers among $L$ layers are selected in an order from the first layer to the L-th layer (from front to back) or from the L-th layer to the first layer (from back to front), to keep the first codeword, where the value of $l$ is a positive integer less than or equal to 4.

In the third implementation in the above, optionally, any full coherence codeword for $\lceil L/2 \rceil$ layers of 4 antenna ports is determined as the first codeword: $W_{4,\lceil L/2 \rceil}$, and any full coherence codeword for $\lfloor L/2 \rfloor$ layers of 4 antenna ports is determined as the second codeword $W_{4,\lfloor L/2 \rfloor}$. $1, \varphi, -1, -\varphi$ are co-phase coefficients, and $\varphi_{p_1}$ is the compensation factor between the antenna panels., then the first coefficient matrix may be: $\Phi = \begin{bmatrix} 1 & 1 \\ \varphi\varphi_{p_1} & -\varphi\varphi_{p_1} \end{bmatrix}$ or

$\Phi = \begin{bmatrix} 1 & -1 \\ \varphi\varphi_{p_1} & \varphi\varphi_{p_1} \end{bmatrix}$. In the embodiments of the present disclosure, after the first codeword and the second codeword are determined, the first codeword and the second codeword are concatenated; and for the concatenating process, reference may be made to the relevant contents in the above embodiments, which will not be further described herein. The codeword $W_{8,L}$ for $L$ layers of the 8 antenna ports multiple antenna panels may be: $W_{8,L} = \begin{bmatrix} W_{4,\lceil L/2 \rceil} & W_{4,\lfloor L/2 \rfloor} \\ \varphi W_{4,\lceil L/2 \rceil} & -\varphi W_{4,\lfloor L/2 \rfloor} \end{bmatrix}$ or

$W_{8,L} = \begin{bmatrix} W_{4,\lceil L/2 \rceil} & -W_{4,\lfloor L/2 \rfloor} \\ \varphi W_{4,\lceil L/2 \rceil} & \varphi W_{4,\lfloor L/2 \rfloor} \end{bmatrix}$.

For example, L=7, a full coherence codeword for 4 layers of 4 antenna ports is selected as the first codeword:

$W_{4,4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$, and a codeword for antenna full coherence transmission for 3 layers of 4 antenna ports is selected as the second codeword: $W_{4,3} = \begin{bmatrix} 1 & 1 & 1 \\ 1 & -1 & 1 \\ 1 & 1 & -1 \\ 1 & -1 & -1 \end{bmatrix}$, where $\varphi = j$, $\varphi_{p_1} = -j$, and $\Phi = \begin{bmatrix} 1 & 1 \\ 1 & -1 \end{bmatrix}$, then the codeword for 7 layers of the 8 antenna ports multiple-panel is: $W_{8,7} = \begin{bmatrix} W_{4,4} & W_{4,3} \\ W_{4,4} & -W_{4,3} \end{bmatrix}$.

It should be noted that when $L$ is an odd number of layers, based on the layer number $l$ of the second codeword, $l$ layers among $L$ layers are selected in an order from the first layer to the $L$-th layer (from front to back) or from the L-th layer to the first layer (from back to front), to keep the second codeword, where the value of $l$ is a positive integer less than or equal to 4.

In a case that the number of the antenna panels is 2, the first candidate codebook is the candidate codebook for 4 antenna ports. When the number of transmission layers is $1 \leq L \leq 4$:

in the fourth implementation in the above, optionally, any full coherence codeword for $L$ layers of 4 antenna ports is determined as the first codeword $W_{4,L}$, and the second codeword is also $W_{4,L}$; 1, $\varphi$, -1, -$\varphi$ are co-phase coefficients, and $\varphi_{p_1}$ is the compensation factor between the antenna panels, then the second coefficient matrix may be determined to be:

$\Phi = \begin{bmatrix} 1 \\ \varphi\varphi_{p_1} \end{bmatrix}$.

In the embodiments of the present disclosure, in a case that $1 \leq L \leq 4$, after the second coefficient matrix is determined, the first codeword and the second codeword are concatenated in a row dimension to generate a fourth concatenated codeword, that is, two first codewords are concatenated to generate the fourth concatenated codeword. In a case that $1 \leq L \leq 4$, the first codeword is directly determined as the second codeword, that is, one of the two first codewords is the second codeword. Further, a matrix dot product operation is performed on the second coefficient matrix and the fourth concatenated codeword to generate the codeword $W_{8,L}$ for $L$ layers of the 8 antenna ports multiple-panel, which may be

$W_{8,L} = \begin{bmatrix} W_{4,L} \\ \varphi_{p_1}\varphi W_{4,L} \end{bmatrix}$, where coefficients in the second coefficient matrix are multiplied by block matrices at corresponding locations in the fourth concatenated codeword.

For example, L=3, a full coherence codeword for 3 layers of 4 antenna ports is the first codeword and the second codeword: $W_{4,3} = \begin{bmatrix} 1 & 1 & 1 \\ 1 & -1 & 1 \\ 1 & 1 & -1 \\ 1 & -1 & -1 \end{bmatrix}$ , and $\varphi = j$, $\varphi_{p_1} = -1$, $\Phi = \begin{bmatrix} 1 \\ -j \end{bmatrix}$ , then the codeword for 3 layers of the 8 antenna ports multiple-panel is: $W_{8,3} = \begin{bmatrix} W_{4,3} \\ -jW_{4,3} \end{bmatrix} = \begin{bmatrix} 1 & 1 & 1 \\ 1 & -1 & 1 \\ 1 & 1 & -1 \\ 1 & -1 & -1 \\ -j & -j & -j \\ -j & j & -j \\ -j & -j & j \\ -j & j & j \end{bmatrix}$ .

In the embodiments of the present disclosure, the full coherence codeword for 4 antenna ports corresponding to the uplink MIMO transmission is determined, and the codeword for L layers of 8 antenna ports may be determined based on the full coherence codeword for 4 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

In a case that the number of the antenna panels is 4, and the first candidate codebook is the candidate codebook for 2 antenna ports:

in the fifth implementation in the above, optionally, any full coherence codeword $W_{2,2}$ for 2 layers of 2 antenna ports is selected and any full coherence codeword $W_{2,1}$ for 1 layer of 2 antenna ports is selected.

In the embodiments of the present disclosure, in a case that the first candidate codebook is the candidate codebook for 2 antenna ports and $4<L\leq8$, the third coefficient matrix is determined based on the co-phase coefficients and the compensation factor; for the first $2*(L-4)$ columns in the $L$ columns, four first codewords are concatenated in a row dimension by using the first codeword as a block matrix, to generate the fifth concatenated codeword; for last 8-L columns in the L columns, four second codewords are concatenated in a row dimension by using the second codeword as a block matrix, to generate the sixth concatenated codeword; and the fifth concatenated codeword and the sixth concatenated codeword are concatenated in a column dimension to generate the seventh concatenated codeword. Further, a matrix dot product operation is performed on the third coefficient matrix and the seventh concatenated codeword to generate the codeword for L layers of the 8 antenna ports multiple antenna panels. The coefficients in the third coefficient matrix are multiplied by the block matrices at the corresponding locations in the seventh concatenated codeword.

The codeword $W_{8,L}$ for $L$ layers of the 8 antenna ports multiple antenna panels is L-4 blocks 8-L blocks

$$W_{8,L} = \begin{bmatrix} \overbrace{W_{2,2} \quad W_{2,2} \quad W_{2,2}}^{L-4 \text{ blocks}} & \overbrace{W_{2,1}}^{8-L \text{ blocks}} \\ \varphi_{p_1}\varphi W_{2,2} & -\varphi_{p_1}\varphi W_{2,2} & \varphi_{p_1}\varphi W_{2,2} & -\varphi_{p_1}\varphi W_{2,1} \\ \varphi_{p_2} W_{2,2} & \varphi_{p_2} W_{2,2} & -\varphi_{p_2} W_{2,2} & -\varphi_{p_2} W_{2,1} \\ \varphi_{p_3}\varphi W_{2,2} & -\varphi_{p_3}\varphi W_{2,2} & -\varphi_{p_3}\varphi W_{2,2} & \varphi_{p_3}\varphi W_{2,1} \end{bmatrix}$$

constructed as . The codeword for 2 layers occupies $L$-4 columns, the codeword for 1 layer occupies 8-L columns (the basic unit is block), $\varphi$ is the co-phase coefficient, $\varphi_{p1}$, $\varphi_{p2}$ and $\varphi_{p3}$ are the compensation factors among the second, third and fourth antenna panels.

For example, L=7, a full coherence codeword for 2 layers of 2 antenna ports is $W_{2,2} = \begin{bmatrix} 1 & 1 \\ 1 & -1 \end{bmatrix}$ , a full coherence codeword for 1 layer of 2 antenna ports is $W_{2,1} = \begin{bmatrix} 1 \\ 1 \end{bmatrix}$ ; $\varphi=1$, $\varphi_{p1} = -1$ , $\varphi_{p2} = j$ , and $\varphi_{p3} = -j$ , then a feasible

$$\begin{bmatrix} 1 & 1 & 1 & 1 \\ -1 & 1 & -1 & 1 \\ j & j & -j & -j \\ -j & j & j & -j \end{bmatrix}$$

implementation of the third coefficient matrix is . It should be noted that if columns of the third coefficient matrix are randomly shuffled, the resulting third coefficient matrix can still ensure inter-layer orthogonality of the codeword.

Based on the third coefficient matrix, $W_{2,2}$ and $W_{2,1}$ are concatenated, the obtained codeword for 7 layers of the 8 antenna ports multiple-panel is:

$$W_{8,7} = \begin{bmatrix} W_{2,2} & W_{2,2} & W_{2,2} & W_{2,1} \\ -W_{2,2} & W_{2,2} & -W_{2,2} & W_{2,1} \\ jW_{2,2} & jW_{2,2} & -jW_{2,2} & -jW_{2,1} \\ -jW_{2,2} & jW_{2,2} & jW_{2,2} & -jW_{2,1} \end{bmatrix}$$

In the embodiments of the present disclosure, the full coherence codeword for 2 antenna ports corresponding to the uplink MIMO transmission is determined, and the codeword for L layers of the 8 antenna ports multiple-panel may be determined based on the full coherence codeword for 2 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

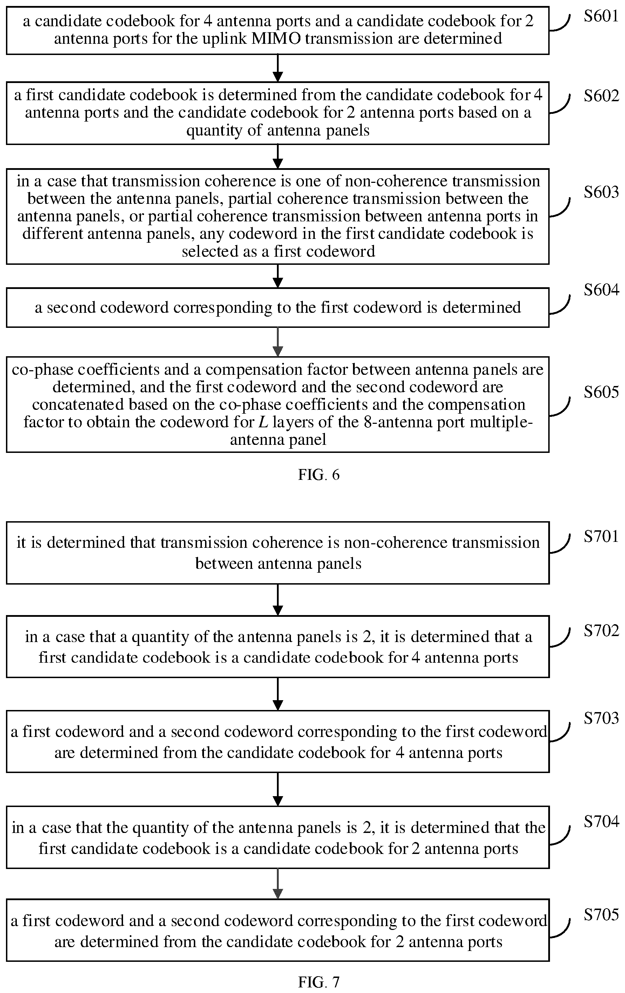

Reference is made to FIG. 6, which is a flow chart of a codeword determination method for 8 antenna ports multiple antenna panels for uplink MIMO transmission according to embodiments of the present disclosure. As shown in FIG. 6, the method may include but is not limited to the following steps.

S601: a candidate codebook for 4 antenna ports and a candidate codebook for 2 antenna ports for the uplink MIMO transmission are determined.

S602: a first candidate codebook is determined from the candidate codebook for 4 antenna ports and the candidate codebook for 2 antenna ports based on a number of antenna panels.

For a detailed description of steps S601 to S602, reference is made to the relevant contents in the above embodiments, which will not be further described herein.

S603: in a case that transmission coherence is one of non-coherence transmission between the antenna panels, partial coherence transmission between the antenna panels, or partial coherence transmission between antenna ports in different antenna panels, any codeword in the first candidate codebook is selected as a first codeword.

S604: a second codeword corresponding to the first codeword is determined.

Optionally, the first candidate codebook is the candidate codebook for 4 antenna ports, and any codeword in the first candidate codebook from the candidate codebook for 4 antenna ports may be selected as the first codeword.

In some implementations, any codeword $W_{4,\lceil L/2 \rceil}$ for $\lceil L/2 \rceil$ layers of 4 antenna ports is selected, and any $\lceil L/2 \rceil$ layers from $W_{4,\lceil L/2 \rceil}$ are selected to generate the second codeword $W'_{4,\lceil L/2 \rceil}$.

In some other implementations, any codeword $W_{4,\lceil L/2 \rceil}$ for $\lceil L/2 \rceil$ layers of 4 antenna ports and any codeword $W_{4,\lfloor L/2 \rfloor}$ for $\lfloor L/2 \rfloor$ layers of 4 antenna ports are selected.

Optionally, the first candidate codebook is the candidate codebook for 2 antenna ports, and any codeword in the first candidate codebook from the candidate codebook for 2 antenna ports may be selected as the first codeword.

In some implementations, any codeword $W_{2,2}$ for 2 layers of 2 antenna ports and any codeword $W_{2,1}$ for 1 layer of 2 antenna ports are selected.

S605: co-phase coefficients and a compensation factor between antenna panels are determined, and the first codeword and the second codeword are concatenated based on the co-phase coefficients and the compensation factor to obtain the codeword for L layers of the 8 antenna ports multiple antenna panels.

For the description of step S605, reference may be made to the relevant contents in the above embodiments, which will not be further described herein.

In the embodiments of the present disclosure, the codeword for 2 antenna ports or 4 antenna ports corresponding to the uplink MIMO transmission is determined, and the codeword for L layers of the 8 antenna ports multiple-panel may be determined based on the codeword for 2 antenna ports or 4 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

A case where the transmission coherence between the multiple antenna panels is non-coherence transmission between the antenna panels, partial coherence transmission between the antenna panels, or partial coherence transmission between antenna ports in different antenna panels is described in the following.

Reference is made to FIG. 7, which is a flow chart of a codeword determination method for 8 antenna ports multiple antenna panels for uplink MIMO transmission according to embodiments of the present disclosure. As shown in FIG. 7, the method may include but is not limited to the following steps.

S701: it is determined that transmission coherence is non-coherence transmission between antenna panels

S702: in a case that a number of the antenna panels is 2, it is determined that a first candidate codebook is a candidate codebook for 4 antenna ports.

S703: a first codeword and a second codeword corresponding to the first codeword are determined from the candidate codebook for 4 antenna ports.

In some implementations, any codeword $W_{4,\lceil L/2 \rceil}$ for $\lceil L/2 \rceil$ layers of 4 antenna ports is selected, and any $\lceil L/2 \rceil$ layers are selected from $W_{4,\lceil L/2 \rceil}$ to generate the second codeword $W'_{4,\lceil L/2 \rceil}$. For example, the first $\lceil L/2 \rceil$ layer may be selected.

After the first codeword and the second codeword are determined, the first codeword and the codeword may be concatenated to obtain a third concatenated codeword. For the specific concatenation process, reference may be made to the relevant contents in the above embodiments, which will not be described in detail herein.

A first coefficient matrix is $\Phi = \begin{bmatrix} 1 & 0 \\ 0 & \varphi_{p_1} \end{bmatrix}$, where $\varphi_{p_1}$ is the compensation factor between the antenna panels.

Further, a matrix dot product operation is performed on the first coefficient matrix and the third concatenated codeword to generate the codeword for L layers of the 8 antenna ports multiple-panel:

$$W_{8,L} = \begin{bmatrix} W_{4,\lceil L/2 \rceil} & 0 \\ 0 & \varphi_{p_1} W'_{4,\lceil L/2 \rceil} \end{bmatrix}.$$

In some other implementations, any codeword $W_{4,\lceil L/2 \rceil}$ for $\lceil L/2 \rceil$ layers of 4 antenna ports and any codeword $W_{4,\lfloor L/2 \rfloor}$ for $\lfloor L/2 \rfloor$ layers of 4 antenna ports are selected, to generate the codeword for L layers of the 8 antenna ports multiple-panel:

$$W_{8,L} = \begin{bmatrix} W_{4,\lceil L/2 \rceil} & 0 \\ 0 & \varphi_{p_1} W_{4,\lfloor L/2 \rfloor} \end{bmatrix}.$$

S704: in a case that the number of the antenna panels is 2, it is determined that the first candidate codebook is a candidate codebook for 2 antenna ports.

S705: a first codeword and a second codeword corresponding to the first codeword are determined from the candidate codebook for 2 antenna ports.

Optionally, any codeword $W_{2,2}$ for 2 layers of 2 antenna ports and any codeword $W_{2,1}$ for 1 layer of 2 antenna ports are selected. After the first codeword and the second codeword are determined, they may be concatenated in the concatenating manner corresponding to the candidate codebook for 2 antenna ports, to obtain a seventh concatenated codeword.

Based on the co-phase coefficients and the compensation factor between the antenna panels, the third coefficient matrix $\begin{bmatrix} 1 & 0 & 0 & 0 \\ 0 & \varphi_{p_1} & 0 & 0 \\ 0 & 0 & \varphi_{p_2} & 0 \\ 0 & 0 & 0 & \varphi_{p_3} \end{bmatrix}$ is obtained

Further, a matrix dot product operation is performed on the third coefficient matrix and the seventh concatenated codeword to generate the codeword for L layers of the 8 antenna ports multiple-panel L-4 blocks 8-L blocks

$$W_{8,L} = \begin{bmatrix} \overbrace{W_{2,2} \quad 0 \quad 0}^{L-4 \text{ blocks}} & \overbrace{0}^{8-L \text{ blocks}} \\ 0 & \varphi_{p_1} W_{2,2} & 0 & 0 \\ 0 & 0 & \varphi_{p_2} W_{2,2} & 0 \\ 0 & 0 & 0 & \varphi_{p_3} W_{2,1} \end{bmatrix}$$

. The codeword for 2 layers occupies *L-4* columns, the codeword for 1 layer occupies 8-L columns (the basic unit is block), $\varphi_{p1}$, $\varphi_{p2}$ and $\varphi_{p3}$ are the compensation factors among the second, third and fourth antenna panels.

It should be noted that in a case that the transmission coherence between the antenna panels is non-coherence transmission between the antenna panels, coherences and specific contents may be the same or different for codewords for 4-antenna-port and codewords for 2-antenna-port at different locations. For example, the codewords for 4-antenna-port may all be non-coherence codewords, which corresponds to a case of non-coherence transmission between all antennas.

In the embodiments of the present disclosure, the codeword for 2 antenna ports or 4 antenna ports corresponding to the uplink MIMO transmission is determined, and the codeword for L layers of the 8 antenna ports multiple-panel may be determined based on the codeword for 2 antenna ports or 4 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

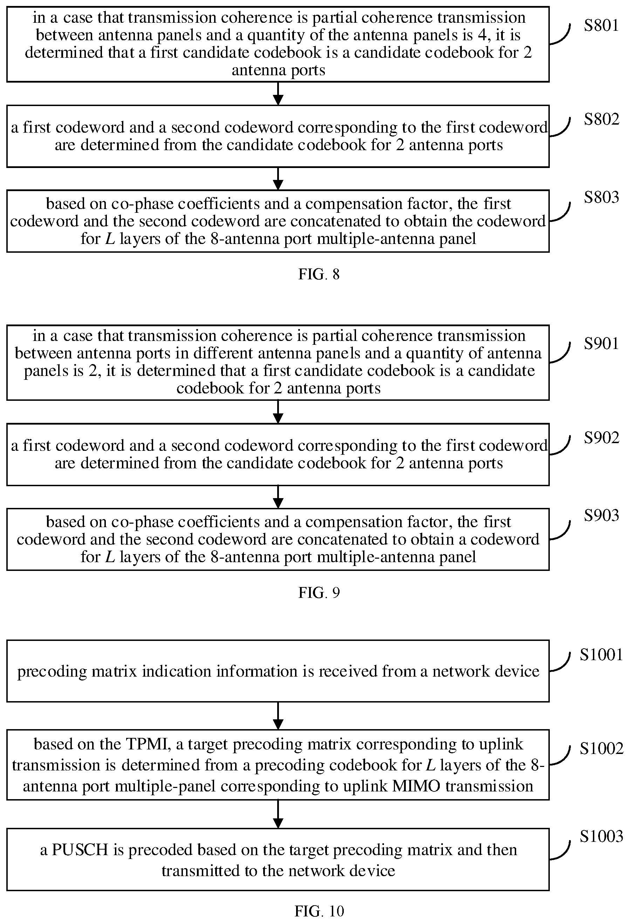

Reference is made to FIG. 8, which is a flow chart of a codeword determination method for 8 antenna ports multiple antenna panels for uplink MIMO transmission according to embodiments of the present disclosure. As shown in FIG. 8, the method may include but is not limited to the following steps.

S801: in a case that transmission coherence is partial coherence transmission between antenna panels and a number of the antenna panels is 4, it is determined that a first candidate codebook is a candidate codebook for 2 antenna ports.

S802: a first codeword and a second codeword corresponding to the first codeword are determined from the candidate codebook for 2 antenna ports.

S803: based on co-phase coefficients and a compensation factor, the first codeword and the second codeword are concatenated to obtain the codeword for L layers of the 8 antenna ports multiple antenna panels.

As shown in FIG. 3, the partial coherence transmission between the antenna panels may be: coherence transmission between the first antenna panel and the third antenna panel and coherence transmission between the second antenna panel and the fourth antenna panel.

Optionally, any codeword $W_{2,2}$ for 2 layers of 2 antenna ports and any codeword $W_{2,1}$ for 1 layer of 2 antenna ports are selected. The codeword $W_{2,2}$ and the codeword $W_{2,1}$ are concatenated in the concatenating manner corresponding to the candidate codebook for 2 antenna ports, to obtain a seventh concatenated codeword. Further, a third coefficient matrix is determined based on the co-phase coefficients and the compensation factor, and a matrix dot product operation is performed on the third coefficient matrix and the seventh concatenated codeword to generate the codeword for L layers of the 8 antenna ports multiple-panel:

$$W_{8,L} = \begin{bmatrix} \overbrace{W_{2,2} \quad W_{2,2} \quad 0}^{L-4 \text{ blocks}} & \overbrace{0}^{8-L \text{ blocks}} \\ 0 & 0 & \varphi_{p_1} W_{2,2} & \varphi_{p_1} W_{2,1} \\ \varphi_{p_2} \varphi W_{2,2} & -\varphi_{p_2} \varphi W_{2,2} & 0 & 0 \\ 0 & 0 & \varphi_{p_3} \varphi W_{2,2} & -\varphi_{p_3} \varphi W_{2,1} \end{bmatrix}.$$

The codeword for 2 layers occupies L-4 columns, the codeword for 1 layer occupies 8-L columns (the basic unit is block), $\varphi$ is the co-phase coefficient, and $\varphi_{p1}$, $\varphi_{p2}$ and $\varphi_{p3}$ are the compensation factors among the second, third and fourth antenna panels.

It should be noted that in a case of partial coherence transmission between the antenna panels, locations, of the codewords for 2 antenna ports, in the codeword for L layers of the 8 antenna ports multiple antenna panels are determined based on antenna panels corresponding to the codewords for 2 antenna ports. That is, for other coherence situation, the codewords for 2 antenna ports are placed on the corresponding antenna panels. For example, the codeword for *L* layers of the 8 antenna ports multiple-panel obtained in the above embodiments may correspond to a case where antenna panel 1 and antenna panel 2 are coherent, and antenna panel 3 and antenna panel 4 are coherent. In addition, coherences and specific contents may be the same or different for codewords for 2-antenna-port at different locations.

In the embodiments of the present disclosure, the codeword for 2 antenna ports corresponding to the uplink MIMO transmission is determined, and the codeword *for L* layers of the 8 antenna ports multiple-panel may be determined based on the codeword for 2 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

Reference is made to FIG. 9, which is a flow chart of a codeword determination method for 8 antenna ports multiple antenna panels for uplink MIMO transmission according to embodiments of the present disclosure. As shown in FIG. 9, the method may include but is not limited to the following steps.

S901: in a case that transmission coherence is partial coherence transmission between antenna ports in different antenna panels and a number of antenna panels is 2, it is determined that a first candidate codebook is a candidate codebook for 2 antenna ports.

The partial coherence transmission between antenna ports in different antenna panels may be: coherence transmission between first and second ports of the first antenna panel and first and second ports of the second antenna panel, and coherence transmission between third and fourth ports of the first antenna panel and third and fourth ports of the second antenna panel. It can be understood that two antenna panels divide the eight antenna ports into four port groups. In embodiments of the present disclosure, the first candidate codebook may be determined to be the candidate codebook for 2 antenna ports.

S902: a first codeword and a second codeword corresponding to the first codeword are determined from the candidate codebook for 2 antenna ports.

S903: based on co-phase coefficients and a compensation factor, the first codeword and the second codeword are concatenated to obtain a codeword for L layers of the 8 antenna ports multiple antenna panels.

Optionally, any codeword $W_{2,2}$ for 2 layers of 2 antenna ports and any codeword $W_{2,1}$ for 1 layer of 2 antenna ports are selected. The codeword $w_{2,2}$ and the codeword $W_{2,1}$ are concatenated in the concatenating manner corresponding to the candidate codebook for 2 antenna ports, to obtain a seventh concatenated codeword. Further, a third coefficient matrix is determined based on the co-phase coefficients and the compensation factor, and a matrix dot product operation is performed on the third coefficient matrix and the seventh concatenated codeword to generate the codeword for L layers of the 8 antenna ports multiple-panel:

$$W_{8,L} = \begin{bmatrix} \overbrace{\begin{matrix} W_{2,2} & W_{2,2} \\ 0 & 0 \\ \varphi_{p_1}\varphi W_{2,2} & -\varphi_{p_1}\varphi W_{2,2} \\ 0 & 0 \end{matrix}}^{L-4 \text{ blocks}} & \overbrace{\begin{matrix} 0 & 0 \\ W_{2,2} & W_{2,1} \\ 0 & 0 \\ \varphi_{p_1}\varphi W_{2,2} & -\varphi_{p_1}\varphi W_{2,1} \end{matrix}}^{8-L \text{ blocks}} \end{bmatrix}$$

The codeword for 2 layers occupies L-4 columns, the codeword for 1 layer occupies 8-L columns (the basic unit is block), $\varphi$ is the co-phase coefficient, and $\varphi_{p1}$ is the compensation factor between the antenna panels.

It should be noted that in a case of partial coherence transmission between antenna ports in different antenna panels, locations, of the codewords for 2 antenna ports, in the codeword for L layers of the 8 antenna ports multiple antenna panels are determined based on antenna ports corresponding to the codewords for 2 antenna ports. That is, for other coherence situation, the codewords for 2 antenna ports are placed on the corresponding antenna ports. For example, the codeword for L layers of the 8 antenna ports multiple-panel obtained in the above embodiments may correspond to a case where first and second ports of the first antenna panel and first and second ports of the second antenna panel transmit coherently, and third and fourth ports of the first antenna panel and third and fourth ports of the second antenna panel transmit coherently. In addition, coherences and specific contents may be the same or different for codewords for 2-antenna-port at different locations.

In the embodiments of the present disclosure, the codeword for 2 antenna ports corresponding to the uplink MIMO transmission is determined, and the codeword for L layers of the 8 antenna ports multiple-panel may be determined based on the codeword for 2 antenna ports. In the embodiments of the present disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

It should be noted that the above embodiments may be implemented individually or in any combination. Furthermore, the above embodiments may be performed by a network side device (e.g., a base station). In an implementation, the above embodiments are performed by a network side device (e.g., a base station), and the network side device (e.g., a base station) transmits the finally determined second codeword to a UE.

In some feasible implementations, the above embodiments may be performed by a user equipment (UE). Furthermore, the UE transmits the finally determined second codeword to a network side device (e.g., a base station).

In some other feasible implementations, the above embodiments may be performed by a network side device (e.g., a base station) and a user equipment (UE) respectively.

The method for determining the codeword for antenna full coherence transmission provided in the above embodiments may be applied to a terminal device and a network device. After the first codeword for antenna full coherence transmission is determined, a precoding codebook may be determined based on the first codeword. The terminal device and the network device may perform PUSCH transmission based on the precoding codebook.

The process of codebook-based uplink transmission (e.g., PUSCH transmission) is explained in the following.

Reference is made to FIG. 10, which is a flow chart of an uplink transmission method according to embodiments of the present disclosure. The method is performed by a terminal device. As shown in FIG. 10, the method may include but is not limited to the following steps.

S1001: precoding matrix indication information is received from a network device.

It should be noted that, in the process of the codebook-based PUSCH transmission, the network device may transmit a precoding matrix indicator (Transmit Precoding Matrix Indicator, TPMI) to the terminal device, and correspondingly, the terminal device may receive the TPMI transmitted by the network device. The TPMI is used to indicate a target precoding matrix in a precoding codebook for L layers of 8 antenna ports multiple-panel.

It should be noted that the precoding codebook corresponding to uplink MIMO transmission includes the first codeword for antenna full coherence transmission determined in the above embodiments. For the process of determining the codeword for L layers of 8 antenna ports multiple-panel, reference may be made to the relevant contents in the above embodiments, which will not be further described herein.

S1002: based on the TPMI, a target precoding matrix corresponding to uplink transmission is determined from a precoding codebook for L layers of the 8 antenna ports multiple-panel corresponding to uplink MIMO transmission.

It should be noted that the terminal device may determine the target precoding matrix corresponding to uplink transmission from the precoding codebook for L layers of the 8 antenna ports multiple-panel corresponding to the uplink MIMO transmission based on the TPMI. The terminal device may determine one target precoding matrix from the precoding codebook based on the TPMI. Optionally, a mapping relationship between precoding matrices and indices may be preset, and the target precoding matrix for uplink transmission may be determined from the precoding codebook based on an index.

S1003: a PUSCH is precoded based on the target precoding matrix and then transmitted to the network device.

After the target precoding matrix is obtained, the PUSCH may be precoded based on the target precoding matrix, and the precoded PUSCH may be transmitted to the network device.

In embodiments of the present disclosure, the TPMI transmitted by the network device is received, the target precoding matrix corresponding to uplink transmission is determined from the precoding codebook for L layers of 8 antenna ports corresponding to the uplink MIMO transmission based on the TPMI, and the PUSCH is precoded based on the target precoding matrix and transmitted to the network device. In this disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

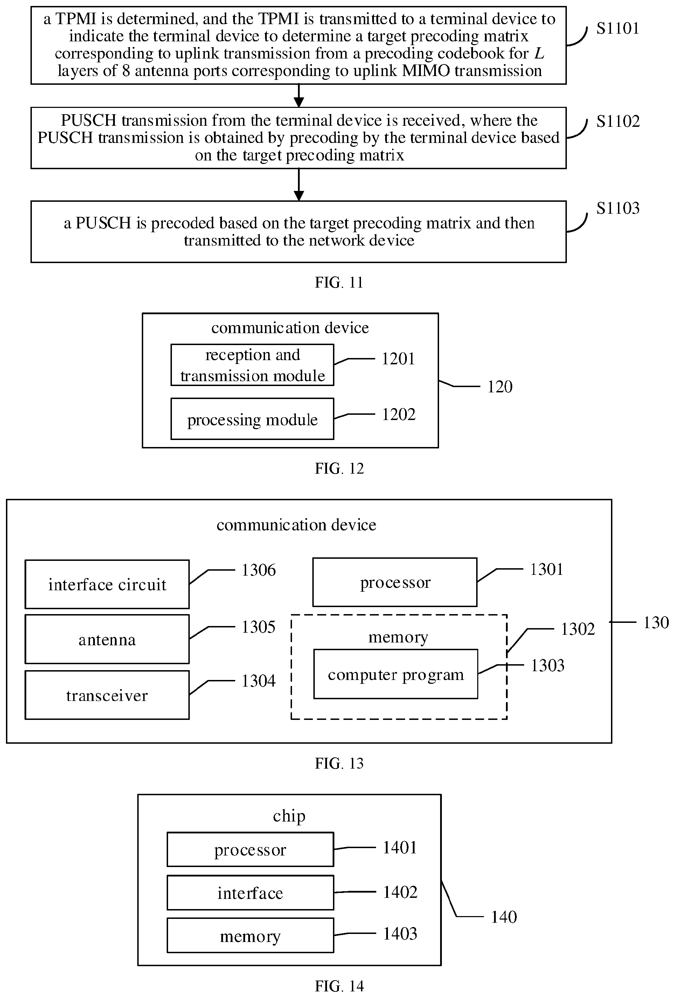

Reference is made to FIG. 11, which is a flow chart of an uplink transmission method according to embodiments of the present disclosure. The method is performed by a network device. As shown in FIG. 11, the method may include but is not limited to the following steps.

S1101: a TPMI is determined, and the TPMI is transmitted to a terminal device to indicate the terminal device to determine a target precoding matrix corresponding to uplink transmission from a precoding codebook for L layers of 8 antenna ports corresponding to uplink MIMO transmission.

In the embodiments of the present disclosure, the network device may receive a sounding reference signal (Sounding Reference Signal, SRS) from the terminal device, perform channel estimation based on the SRS, determine the TPMI based on the estimated channel situation, and transmit the TPMI to the terminal device. The TPMI is used to indicate a precoding matrix in a precoding codebook, which may be an index of the precoding matrix.

It should be noted that the precoding codebook corresponding to the uplink MIMO transmission includes the first codeword for antenna full coherence transmission based on 8 antenna ports in the above embodiments. For the process of determining the first codeword for antenna full coherence transmission for L layers of 8 antenna ports, reference may be made to the relevant contents in the above embodiments, which will not be further described herein.

S1102: PUSCH transmission from the terminal device is received, where the PUSCH transmission is obtained by precoding by the terminal device based on the target precoding matrix.

After receiving the TPMI, the terminal device may obtain the target precoding matrix determined for uplink transmission, precode the PUSCH based on the target precoding matrix, and transmit the precoded PUSCH to the network device. Accordingly, the network device may receive the PUSCH transmission transmitted by the terminal device.

In embodiments of the present disclosure, the precoding matrix indication information is determined, and the precoding matrix indication information is transmitted to the terminal device to indicate the terminal device to determine the target precoding matrix corresponding to uplink transmission from the precoding codebook for L layers of 8 antenna ports corresponding to the uplink MIMO transmission. The PUSCH transmission is received from the terminal device, where the PUSCH transmission is obtained by precoding by the terminal device based on the target precoding matrix. In embodiments of the present disclosure, the precoding matrix indication information transmitted by the network device is received, and the target precoding matrix corresponding to uplink transmission is determined from the precoding codebook for L layers of 8 antenna ports corresponding to the uplink MIMO transmission based on the precoding matrix indication information. The PUSCH is precoded based on the target precoding matrix and transmitted to the network device. In this disclosure, the high-dimensional codeword for antenna full coherence transmission of 8 antenna ports can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

In the above embodiments provided in the present disclosure, the methods provided in the embodiments of the present disclosure are introduced from the perspectives of the network device and the terminal device respectively. In order to implement the various functions in the method provided in the above embodiments of the present disclosure, each of the network device and the first terminal device may include a hardware structure, a software module, and may implement the above functions in the form of a hardware structure, a software module, or a hardware structure plus a software module. A function of the above functions may be implemented in the form of a hardware structure, a software module, or a hardware structure plus a software module.

Reference is made to FIG. 12, which is a structural diagram of a communication device 120 according to embodiments of the present disclosure. The communication device 120 shown in FIG. 7 may include a reception and transmission module 1201 and a processing module 1202. The reception and transmission module 1201 may include a transmission module and/or a reception module. The transmission module is configured to implement a transmission function, and the reception module is configured to implement a reception function. The reception and transmission module 1201 may implement a transmission function and/or a reception function.

The communication device 120 may be a terminal device, or a device in a terminal device, or a device that can be used in conjunction with a terminal device. Or, the communication device 120 may be a network device, or a device in a network device, or a device that can be used in conjunction with a network device.

The processing module 1202 is configured to: determine a candidate codebook for 4 antenna ports and/or a candidate codebook for 2 antenna ports for uplink MIMO transmission; determine panel configuration information for 8 antenna ports multiple antenna panels for the uplink MIMO transmission; and determine a codeword for L layers of the 8 antenna ports multiple antenna panels based on the candidate codebook(s) and the panel configuration information, where L is less than or equal to 8.

Optionally, the processing module 1202 is further configured to: determine a first candidate codebook from the candidate codebook for 4 antenna ports and the candidate codebook for 2 antenna ports based on the panel configuration information, and determine a first codeword from the first candidate codebook; determine a second codeword corresponding to the first codeword; and determine co-phase coefficients and a compensation factor between antenna panels, and concatenating the first codeword and the second codeword based on the co-phase coefficients and the compensation factor to obtain the codeword for L layers of the 8 antenna ports multiple antenna panels.

Optionally, the processing module 1202 is further configured to: in a case that the first candidate codebook is the candidate codebook for 4 antenna ports and $4<L\leq8$, determine a first coefficient matrix based on the co-phase coefficients and the compensation factor; concatenate two first codewords in a row dimension to generate a first concatenated codeword; concatenate two second codewords in a row dimension to generate a second concatenated codeword; concatenate the first concatenated codeword and the second concatenated codeword in a column dimension to generate a third concatenated codeword; and perform a matrix dot product operation on the first coefficient matrix and the third concatenated codeword to generate the codeword for L layers of the 8 antenna ports multiple antenna panels, where coefficients in the first coefficient matrix are multiplied by block matrices at corresponding locations in the third concatenated codeword.

Optionally, the processing module 1202 is further configured to: in a case that the first candidate codebook is the candidate codebook for 4 antenna ports and $1\leq L\leq4$, determine a second coefficient matrix based on the co-phase coefficients and the compensation factor; concatenate the first codeword and the second codeword in a row dimension to generate a fourth concatenated codeword; and perform a matrix dot product operation on the second coefficient matrix and the fourth concatenated codeword to generate the codeword for L layers of the 8 antenna ports multiple antenna panels, where coefficients in the second coefficient matrix are multiplied by block matrices at corresponding locations in the fourth concatenated codeword.

Optionally, the processing module 1202 is further configured to: in a case that the first candidate codebook is the candidate codebook for 2 antenna ports and $4<L\leq8$, determine a third coefficient matrix based on the co-phase coefficients and the compensation factor; for first $2*(L-4)$ columns in $L$ columns, concatenate four first codewords in a row dimension by using the first codeword as a block matrix, to generate a fifth concatenated codeword; for last 8-L columns in the L columns, concatenate four second codewords in a row dimension by using the second codeword as a block matrix, to generate a sixth concatenated codeword; concatenate the fifth concatenated codeword and the sixth concatenated codeword in a column dimension to generate a seventh concatenated codeword; and perform a matrix dot product operation on the third coefficient matrix and the seventh concatenated codeword to generate the codeword for L layers of the 8 antenna ports multiple antenna panels, where coefficients in the third coefficient matrix are multiplied by block matrices at corresponding locations in the seventh concatenated codeword.

Optionally, the processing module 1202 is further configured to: determine the first candidate codebook from the candidate codebook for 4 antenna ports and the candidate codebook for 2 antenna ports based on the number of the antenna panels; and determine the first codeword from the first candidate codebook based on the transmission coherence.

Optionally, the processing module 1202 is further configured to: in a case that the transmission coherence is full coherence transmission between the antenna panels, select a full coherence codeword from the first candidate codebook as the first codeword.

Optionally, the processing module 1202 is further configured to: in a case that the first candidate codebook is the candidate codebook for 4 antenna ports and a number of transmission layers is $5\leq L\leq8$, determine a full coherence codeword for $\lceil L/2 \rceil$ layers of 4 antenna ports as the first codeword; and select $\lfloor L/2 \rfloor$ columns of vectors from the first codeword to generate the second codeword.

Optionally, the processing module 1202 is further configured to: in a case that the first candidate codebook is the candidate codebook for 4 antenna ports and a number of transmission layers is $5\leq L\leq8$, determine a full coherence codeword for 4 layers of 4 antenna ports as the first codeword; and determine the first codeword as the second codeword.

Optionally, the processing module 1202 is further configured to: concatenate the first codeword and the second codeword to obtain a codeword for 8 layers of 8 antenna ports, and select L columns of vectors from the codeword for 8 layers of 8 antenna ports to generate the codeword for L layers of the 8 antenna ports multiple antenna panels.

Optionally, the processing module 1202 is further configured to: in a case that first candidate codebook is the candidate codebook for 4 antenna ports, determine a full coherence codeword for 4 layers of 4 antenna ports as the first codeword; and in a case that a number of transmission layers is $4\leq L\leq8$, select L-4 columns of vectors from the first codeword based on the L layers, to generate the second codeword.

Optionally, the processing module 1202 is further configured to: in a case that the first candidate codebook is the candidate codebook for 4 antenna ports and a number of transmission layers is $5\leq L\leq8$, determine a full coherence codeword for $\lceil L/2 \rceil$ layers of 4 antenna ports as the first codeword; and determine a full coherence codeword for $\lfloor L/2 \rfloor$ layers of 4 antenna ports as the second codeword.

Optionally, the processing module 1202 is further configured to: in a case that the first candidate codebook is the candidate codebook for 4 antenna ports and a number of transmission layers is $1\leq L\leq4$, determine a full coherence codeword for L layers of 4 antenna ports as the first codeword; and determine the first codeword as the second codeword.

Optionally, the processing module 1202 is further configured to: in a case that the first candidate codebook is the candidate codebook for 2 antenna ports, determine a full coherence codeword for 2 layers of 2 antenna ports as the first codeword; and determine a full coherence codeword for 1 layer of 2 antenna ports as the second codeword.

Optionally, the processing module 1202 is further configured to: in a case that the transmission coherence is one of non-coherence transmission between the antenna panels, partial coherence transmission between the antenna panels, or partial coherence transmission between antenna ports in different antenna panels, select any codeword from the first candidate codebook as the first codeword.

Optionally, the processing module 1202 is further configured to: in a case that the first candidate codebook is the candidate codebook for 4 antenna ports and the transmission coherence is non-coherence transmission between the antenna panels, determine a codeword for $\lceil L/2 \rceil$ layers of 4 antenna ports as the first codeword; and select $\lfloor L/2 \rfloor$ columns of vectors from the first codeword to generate the second codeword.

Optionally, the processing module 1202 is further configured to: in a case that the first candidate codebook is the candidate codebook for 4 antenna ports and the transmission coherence is non-coherence transmission between the antenna panels, determine a codeword for $\lceil L/2 \rceil$ layers of 4 antenna ports as the first codeword; and determine a codeword for $\lfloor L/2 \rfloor$ layers of 4 antenna ports as the second codeword.

Optionally, the processing module 1202 is further configured to: in a case that the first candidate codebook is the candidate codebook for 2 antenna ports, determine a codeword for 2 layers of 2 antenna ports as the first codeword; and determine a codeword for 1 layer of 2 antenna ports as the second codeword.

Optionally, the processing module 1202 is further configured to: in a case of partial coherence transmission between the antenna panels or partial coherence transmission between antenna ports in different antenna panels, determine locations, of the codewords for 2 antenna ports, in the codeword for L layers of the 8 antenna ports multiple antenna panels based on antenna panels or antenna ports corresponding to the codewords for 2 antenna ports.

Optionally, the processing module 1202 is further configured to: determine a normalization coefficient for any codeword, and perform energy normalization processing on the any codeword based on the normalization coefficient.

In the embodiments of the present disclosure, the candidate codebook for 4 antenna ports and/or the candidate codebook for 2 antenna ports for the uplink MIMO transmission are determined, and the panel configuration information for the 8 antenna ports multiple antenna panels for the uplink MIMO transmission is determined; and the codeword for L layers of the 8 antenna ports multiple-panel is determined based on the candidate codebook(s) and the panel configuration information. In the embodiments of the present disclosure, the high-dimensional codeword for antenna full coherence transmission for the 8 antenna ports multiple-panel can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

Reference is made to FIG. 13, which is a structural diagram of a communication device 130 according to embodiments of the present disclosure. The communication device 130 may be a network device, or a terminal device, or a chip, chip system, or processor that supports the network device to implement the above method, or a chip, chip system, or processor that supports the terminal device to implement the above method. The device may be configured to implement the method described in the above method embodiments. For details, reference may made to the description in the above method embodiments.

The communication device 130 may include one or more processors 1301. The processor 1301 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a terminal device, a terminal device chip, a DU or a CU, etc.), execute a computer program, and process data for the computer program.

Optionally, the communication device 130 may further include one or more memories 1302, on which a computer program 1303 may be stored. The processor 1301 executes the computer program 1303, to cause the communication device 130 to perform the method described in the above method embodiments. Optionally, the memory 1302 may further store data. The communication device 130 and the memory 1302 may be arranged separately or integrated together.

Optionally, the communication device 130 may further include a transceiver 1304 and an antenna 1305. The transceiver 1304 may be referred to as a reception and transmission unit, a transceiver unit, a reception and transmission circuit, etc., and is configured to implement reception and transmission functions. The transceiver 1304 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication device 130 may further include one or more interface circuits 1306. The interface circuit 1306 is configured to receive code instructions and transmit them to the processor 1301. The processor 1301executes the code instructions to cause the communication device 130 to perform the method described in the above method embodiments.

The communication device 130 is a terminal device configured to implement the functions in the above embodiments.

In an implementation, the processor 1301 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 1301 may store a computer program 1303, and the computer program 1303 is executed on the processor 1301, to cause the communication device 130 to perform the method described in the above method embodiments. The computer program 1303 may be embedded in the processor 1301, and in this case, the processor 1301 may be implemented by hardware.

In an implementation, the communication device 130 may include a circuit, and the circuit may implement functions of reception or transmission or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), negative channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device, but the scope of the communication device described in the present disclosure is not limited thereto, and the structure of the communication device may not be limited to FIG. 13. The communication device may be a stand-alone device or may be part of a larger device. For example, the communication device may be:

(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal device, intelligent terminal device, a cellular phone, a wireless equipment, a handheld device, a mobile unit, a vehicle-mounted device, a network device, a cloud device, an artificial intelligence device, etc.;
(6) others, etc.

For a case where the communication device may be a chip or a chip system, reference may be made to FIG. 14, which is a structural diagram of a chip. The chip shown in FIG. 14 includes a processor 1401 and an interface 1402. The number of processors 1401 may be one or more, and the number of interfaces 1402 may be multiple.

The processor 1401 is configured to: determine a candidate codebook for 4 antenna ports and/or a candidate codebook for 2 antenna ports for uplink MIMO transmission; determine panel configuration information for 8 antenna ports multiple antenna panels for the uplink MIMO transmission; and determine a codeword for L layers of the 8 antenna ports multiple antenna panels based on the candidate codebook(s) and the panel configuration information, where L is less than or equal to 8.

Optionally, the processor 1401 is further configured to: determine a first candidate codebook from the candidate codebook for 4 antenna ports and the candidate codebook for 2 antenna ports based on the panel configuration information, and determine a first codeword from the first candidate codebook; determine a second codeword corresponding to the first codeword; and determine co-phase coefficients and a compensation factor between antenna panels, and concatenating the first codeword and the second codeword based on the co-phase coefficients and the compensation factor to obtain the codeword for L layers of the 8 antenna ports multiple antenna panels.

Optionally, the processor 1401 is further configured to: in a case that the first candidate codebook is the candidate codebook for 4 antenna ports and $4 < L \leq 8$, determine a first coefficient matrix based on the co-phase coefficients and the compensation factor; concatenate two first codewords in a row dimension to generate a first concatenated codeword; concatenate two second codewords in a row dimension to generate a second concatenated codeword; concatenate the first concatenated codeword and the second concatenated codeword in a column dimension to generate a third concatenated codeword; and perform a matrix dot product operation on the first coefficient matrix and the third concatenated codeword to generate the codeword for L layers of the 8 antenna ports multiple antenna panels, where coefficients in the first coefficient matrix are multiplied by block matrices at corresponding locations in the third concatenated codeword.

Optionally, the processor 1401 is further configured to: in a case that the first candidate codebook is the candidate codebook for 4 antenna ports and $1 \leq L \leq 4$, determine a second coefficient matrix based on the co-phase coefficients and the compensation factor; concatenate the first codeword and the second codeword in a row dimension to generate a fourth concatenated codeword; and perform a matrix dot product operation on the second coefficient matrix and the fourth concatenated codeword to generate the codeword for L layers of the 8 antenna ports multiple antenna panels, where coefficients in the second coefficient matrix are multiplied by block matrices at corresponding locations in the fourth concatenated codeword.

Optionally, the processor 1401 is further configured to: in a case that the first candidate codebook is the candidate codebook for 2 antenna ports and $4 < L \leq 8$, determine a third coefficient matrix based on the co-phase coefficients and the compensation factor; for first $2*(L-4)$ columns in L columns, concatenate four first codewords in a row dimension by using the first codeword as a block matrix, to generate a fifth concatenated codeword; for last 8-L columns in the L columns, concatenate four second codewords in a row dimension by using the second codeword as a block matrix, to generate a sixth concatenated codeword; concatenate the fifth concatenated codeword and the sixth concatenated codeword in a column dimension to generate a seventh concatenated codeword; and perform a matrix dot product operation on the third coefficient matrix and the seventh concatenated codeword to generate the codeword for $L$ layers of the 8 antenna ports multiple antenna panels, where coefficients in the third coefficient matrix are multiplied by block matrices at corresponding locations in the seventh concatenated codeword.

Optionally, the processor 1401 is further configured to: determine the first candidate codebook from the candidate codebook for 4 antenna ports and the candidate codebook for 2 antenna ports based on the number of the antenna panels; and determine the first codeword from the first candidate codebook based on the transmission coherence.

Optionally, the processor 1401 is further configured to: in a case that the transmission coherence is full coherence transmission between the antenna panels, select a full coherence codeword from the first candidate codebook as the first codeword.

Optionally, the processor 1401 is further configured to: in a case that the first candidate codebook is the candidate codebook for 4 antenna ports and a number of transmission layers is $5 \leq L \leq 8$, determine a full coherence codeword for $\lceil L/2 \rceil$ layers of 4 antenna ports as the first codeword; and select $\lfloor L/2 \rfloor$ columns of vectors from the first codeword to generate the second codeword.

Optionally, the processor 1401 is further configured to: in a case that the first candidate codebook is the candidate codebook for 4 antenna ports and a number of transmission layers is $5 \leq L \leq 8$, determine a full coherence codeword for 4 layers of 4 antenna ports as the first codeword; and determine the first codeword as the second codeword.

Optionally, the processor 1401 is further configured to: concatenate the first codeword and the second codeword to obtain a codeword for 8 layers of 8 antenna ports, and select L columns of vectors from the codeword for 8 layers of 8 antenna ports to generate the codeword for L layers of the 8 antenna ports multiple antenna panels.

Optionally, the processor 1401 is further configured to: in a case that first candidate codebook is the candidate codebook for 4 antenna ports, determine a full coherence codeword for 4 layers of 4 antenna ports as the first codeword; and in a case that a number of transmission layers is $4 < L \leq 8$, select L-4 columns of vectors from the first codeword based on the L layers, to generate the second codeword.

Optionally, the processor 1401 is further configured to: in a case that the first candidate codebook is the candidate codebook for 4 antenna ports and a number of transmission layers is $5 \leq L \leq 8$, determine a full coherence codeword for $\lceil L/2 \rceil$ layers of 4 antenna ports as the first codeword; and determine a full coherence codeword for $\lfloor L/2 \rfloor$ layers of 4 antenna ports as the second codeword.

Optionally, the processor 1401 is further configured to: in a case that the first candidate codebook is the candidate codebook for 4 antenna ports and a number of transmission layers is $1 \leq L \leq 4$, determine a full coherence codeword for L layers of 4 antenna ports as the first codeword; and determine the first codeword as the second codeword.

Optionally, the processor 1401 is further configured to: in a case that the first candidate codebook is the candidate codebook for 2 antenna ports, determine a full coherence codeword for 2 layers of 2 antenna ports as the first codeword; and determine a full coherence codeword for 1 layer of 2 antenna ports as the second codeword.

Optionally, the processor 1401 is further configured to: in a case that the transmission coherence is one of non-coherence transmission between the antenna panels, partial coherence transmission between the antenna panels, or partial coherence transmission between antenna ports in different antenna panels, select any codeword from the first candidate codebook as the first codeword.

Optionally, the processor 1401 is further configured to: in a case that the first candidate codebook is the candidate codebook for 4 antenna ports and the transmission coherence is non-coherence transmission between the antenna panels, determine a codeword for $\lceil L/2 \rceil$ layers of 4 antenna ports as the first codeword; and select $\lfloor L/2 \rfloor$ columns of vectors from the first codeword to generate the second codeword.

Optionally, the processor 1401 is further configured to: in a case that the first candidate codebook is the candidate codebook for 4 antenna ports and the transmission coherence is non-coherence transmission between the antenna panels, determine a codeword for $\lceil L/2 \rceil$ layers of 4 antenna ports as the first codeword; and determine a codeword for $\lfloor L/2 \rfloor$ layers of 4 antenna ports as the second codeword.

Optionally, the processor 1401 is further configured to: in a case that the first candidate codebook is the candidate codebook for 2 antenna ports, determine a codeword for 2 layers of 2 antenna ports as the first codeword; and determine a codeword for 1 layer of 2 antenna ports as the second codeword.

Optionally, the processor 1401 is further configured to: in a case of partial coherence transmission between the antenna panels or partial coherence transmission between antenna ports in different antenna panels, determine locations, of the codewords for 2 antenna ports, in the codeword for L layers of the 8 antenna ports multiple antenna panels based on antenna panels or antenna ports corresponding to the codewords for 2 antenna ports.

Optionally, the processor 1401 is further configured to: determine a normalization coefficient for any codeword, and perform energy normalization processing on the any codeword based on the normalization coefficient.

The chip 140 further includes a memory 1403, and the memory 1403 is configured to store needed computer programs and data.

In the embodiments of the present disclosure, the candidate codebook for 4 antenna ports and/or the candidate codebook for 2 antenna ports for the uplink MIMO transmission are determined, and the panel configuration information for the 8 antenna ports multiple antenna panels for the uplink MIMO transmission is determined; and the codeword for L layers of the 8 antenna ports multiple-panel is determined based on the candidate codebook(s) and the panel configuration information. In the embodiments of the present disclosure, the high-dimensional codeword for antenna full coherence transmission for the 8 antenna ports multiple-panel can be constructed based on the low-dimensional codeword for antenna full coherence transmission, which can enable uplink MIMO to support requirements for transmission on 1 layer to 8 layers of 8 antenna ports, thereby further enhancing the uplink MIMO technology.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

Embodiments of the present disclosure also provide a communication system, which includes the communication device serving as a terminal device and the communication device serving as a network device in the embodiments of FIG. 8 in the above, or the system includes the communication device serving as a terminal device and the communication device serving as a network device in the embodiments of FIG. 9 in the above.

The present disclosure further provides a readable storage medium, on which instructions are stored. When the instructions are executed by a computer, the functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, predefined, stored, pre-stored, pre-negotiated, pre-configured, solidified, or pre-burnt. Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

**Claims**

1. A codeword determination method for 8 antenna ports multiple antenna panels for uplink multiple input multiple output (MIMO) transmission, comprising:

   determining a candidate codebook for 4 antenna ports and/or a candidate codebook for 2 antenna ports for the uplink MIMO transmission;
   determining panel configuration information for the 8 antenna ports multiple antenna panels for the uplink MIMO transmission; and
   determining a codeword for L layers of the 8 antenna ports multiple antenna panels based on the candidate codebook(s) and the panel configuration information, where L is less than or equal to 8.

2. The codeword determination method according to claim 1, wherein determining the first codeword for L layers of the 8 antenna ports multiple antenna panels based on the candidate codebook(s) and the panel configuration information comprises:

   determining a first candidate codebook from the candidate codebook for 4 antenna ports and the candidate codebook for 2 antenna ports based on the panel configuration information, and determining a first codeword from the first candidate codebook;
   determining a second codeword corresponding to the first codeword; and
   determining co-phase coefficients and a compensation factor between antenna panels, and concatenating the first codeword and the second codeword based on the co-phase coefficients and the compensation factor to obtain the codeword for L layers of the 8 antenna ports multiple antenna panels.

3. The codeword determination method according to claim 2, wherein concatenating the first codeword and the second codeword based on the co-phase coefficients and the compensation factor to obtain the codeword for L layers of the 8 antenna ports multiple antenna panels comprises:

   in a case that the first candidate codebook is the candidate codebook for 4 antenna ports and $4 < L \leq 8$, determining a first coefficient matrix based on the co-phase coefficients and the compensation factor;
   concatenating two first codewords in a row dimension to generate a first concatenated codeword;
   concatenating two second codewords in a row dimension to generate a second concatenated codeword;
   concatenating the first concatenated codeword and the second concatenated codeword in a column dimension to generate a third concatenated codeword; and
   performing a matrix dot product operation on the first coefficient matrix and the third concatenated codeword to generate the codeword for L layers of the 8 antenna ports multiple antenna panels, wherein coefficients in the first coefficient matrix are multiplied by block matrices at corresponding locations in the third concatenated codeword.

4. The codeword determination method according to claim 2, wherein concatenating the first codeword and the second codeword based on the co-phase coefficients and the compensation factor to obtain the codeword for L layers of the 8 antenna ports multiple antenna panels comprises:

   in a case that the first candidate codebook is the candidate codebook for 4 antenna ports and $1 \leq L \leq 4$, determining

a second coefficient matrix based on the co-phase coefficients and the compensation factor;

concatenating the first codeword and the second codeword in a row dimension to generate a fourth concatenated codeword; and

performing a matrix dot product operation on the second coefficient matrix and the fourth concatenated codeword to generate the codeword for L layers of the 8 antenna ports multiple antenna panels, wherein coefficients in the second coefficient matrix are multiplied by block matrices at corresponding locations in the fourth concatenated codeword.

5. The codeword determination method according to claim 2, wherein concatenating the first codeword and the second codeword based on the co-phase coefficients and the compensation factor to obtain the codeword for L layers of the 8 antenna ports multiple antenna panels comprises:

in a case that the first candidate codebook is the candidate codebook for 2 antenna ports and 4<L≤8, determining a third coefficient matrix based on the co-phase coefficients and the compensation factor;

for first 2*(L-4) columns in L columns, concatenating four first codewords in a row dimension by using the first codeword as a block matrix, to generate a fifth concatenated codeword;

for last 8-L columns in the L columns, concatenating four second codewords in a row dimension by using the second codeword as a block matrix, to generate a sixth concatenated codeword;

concatenating the fifth concatenated codeword and the sixth concatenated codeword in a column dimension to generate a seventh concatenated codeword; and

performing a matrix dot product operation on the third coefficient matrix and the seventh concatenated codeword to generate the codeword for L layers of the 8 antenna ports multiple antenna panels, wherein coefficients in the third coefficient matrix are multiplied by block matrices at corresponding locations in the seventh concatenated codeword.

6. The codeword determination method according to any one of claims 2 to 4, wherein the panel configuration information comprises a number of antenna panels and transmission coherence between the antenna panels, and determining the first codeword comprises:

determining the first candidate codebook from the candidate codebook for 4 antenna ports and the candidate codebook for 2 antenna ports based on the number of the antenna panels; and

determining the first codeword from the first candidate codebook based on the transmission coherence.

7. The codeword determination method according to claim 6, further comprising:
in a case that the transmission coherence is full coherence transmission between the antenna panels, selecting a full coherence codeword from the first candidate codebook as the first codeword.

8. The codeword determination method according to claim 7, further comprising:

in a case that the first candidate codebook is the candidate codebook for 4 antenna ports and a number of transmission layers is 5≤L≤8, determining a full coherence codeword for $\lceil L/2 \rceil$ layers of 4 antenna ports as the first codeword; and

selecting $\lfloor L/2 \rfloor$ columns of vectors from the first codeword to generate the second codeword.

9. The codeword determination method according to claim 7, further comprising:

in a case that the first candidate codebook is the candidate codebook for 4 antenna ports and a number of transmission layers is 5≤L≤8, determining a full coherence codeword for 4 layers of 4 antenna ports as the first codeword; and

determining the first codeword as the second codeword.

10. The codeword determination method according to claim 9, further comprising: concatenating the first codeword and the second codeword to obtain a codeword for 8 layers of 8 antenna ports, and selecting L columns of vectors from the codeword for 8 layers of 8 antenna ports to generate the codeword for L layers of the 8 antenna ports multiple antenna panels.

11. The codeword determination method according to claim 7, further comprising:

in a case that first candidate codebook is the candidate codebook for 4 antenna ports, determining a full coherence codeword for 4 layers of 4 antenna ports as the first codeword; and

in a case that a number of transmission layers is 4≤L≤8, selecting L-4 columns of vectors from the first codeword based on the L layers, to generate the second codeword.

12. The codeword determination method according to claim 7, further comprising:

in a case that the first candidate codebook is the candidate codebook for 4 antenna ports and a number of transmission layers is 5≤L≤8, determining a full coherence codeword for $\lceil L/2 \rceil$ layers of 4 antenna ports as the first codeword; and

determining a full coherence codeword for $\lfloor L/2 \rfloor$ layers of 4 antenna ports as the second codeword.

13. The codeword determination method according to claim 7, further comprising:

in a case that the first candidate codebook is the candidate codebook for 4 antenna ports and a number of transmission layers is 1≤L≤4, determining a full coherence codeword for L layers of 4 antenna ports as the first codeword; and

determining the first codeword as the second codeword.

14. The codeword determination method according to claim 7, further comprising:

in a case that the first candidate codebook is the candidate codebook for 2 antenna ports, determining a full coherence codeword for 2 layers of 2 antenna ports as the first codeword; and

determining a full coherence codeword for 1 layer of 2 antenna ports as the second codeword.

15. The codeword determination method according to claim 6, further comprising: in a case that the transmission coherence is one of non-coherence transmission between the antenna panels, partial coherence transmission between the antenna panels, or partial coherence transmission between antenna ports in different antenna panels, selecting any codeword from the first candidate codebook as the first codeword.

16. The codeword determination method according to claim 15, further comprising:

in a case that the first candidate codebook is the candidate codebook for 4 antenna ports and the transmission coherence is non-coherence transmission between the antenna panels, determining a codeword for $\lceil L/2 \rceil$ layers of 4 antenna ports as the first codeword; and

selecting $\lfloor L/2 \rfloor$ columns of vectors from the first codeword to generate the second codeword.

17. The codeword determination method according to claim 15, further comprising:

in a case that the first candidate codebook is the candidate codebook for 4 antenna ports and the transmission coherence is non-coherence transmission between the antenna panels, determining a codeword for $\lceil L/2 \rceil$ layers of 4 antenna ports as the first codeword; and

determining a codeword for $\lfloor L/2 \rfloor$ layers of 4 antenna ports as the second codeword.

18. The codeword determination method according to claim 15, further comprising:

in a case that the first candidate codebook is the candidate codebook for 2 antenna ports, determining a codeword for 2 layers of 2 antenna ports as the first codeword; and

determining a codeword for 1 layer of 2 antenna ports as the second codeword.

19. The codeword determination method according to claim 18, further comprising: in a case of partial coherence transmission between the antenna panels or partial coherence transmission between antenna ports in different antenna panels, determining locations, of the codewords for 2 antenna ports, in the codeword for L layers of the 8 antenna ports multiple antenna panels based on antenna panels or antenna ports corresponding to the codewords for 2 antenna ports.

20. The codeword determination method according to claim 1, further comprising: determining a normalization coefficient for any codeword, and performing energy normalization processing on the any codeword based on the normalization coefficient.

21. A communication device, comprising:
a processing module, configured to: determine a candidate codebook for 4 antenna ports and/or a candidate codebook for 2 antenna ports for uplink **MIMO** transmission; determine panel configuration information for 8 antenna ports multiple antenna panels for the uplink **MIMO** transmission; and determine a codeword for L layers of the 8 antenna ports multiple antenna panels based on the candidate codebook(s) and the panel configuration information, where L is less than or equal to 8.

22. A communication device, comprising a processor and a memory, wherein the memory is configured to store a computer program, and the processor is configured to execute the computer program stored in the memory to cause the communication device to perform the codeword determination method according to any one of claims 1 to 20.

23. A communication device, comprising a processor and an interface circuit;

wherein the interface circuit is configured to receive code instructions and transmit the code instructions to the processor;
wherein the processor is configured to execute the code instructions to perform the codeword determination method according to any one of claims 1 to 20.

24. A computer readable storage medium, configured to store instructions, wherein when the instructions are executed, the codeword determination method according to any one of claims 1 to 20 is performed.

FIG. 1

| | |
|---|---|
| a candidate codebook for 4 antenna ports and/or a candidate codebook for 2 antenna ports for the uplink MIMO transmission is determined | S201 |
| panel configuration information for the 8-antenna port multiple-antenna panel for the uplink MIMO transmission is determined. | S202 |
| a codeword for $L$ layers of 8 antenna ports for the uplink MIMO transmission is determined based on the candidate codebook(s) and the panel configuration information | S203 |

FIG. 2

(a) first antenna arrangement in a case that the quantity of panels is 2 $(M,N,P,Ng)=(1,2,2,2)$

(b) second antenna arrangement in a case that the quantity of panels is 2 $(M,N,P,Ng)=(1,2,2,2)$

(c) first antenna arrangement in a case that the quantity of panels is 4 $(M,N,P,Ng)=(1,1,2,4)$

(d) second antenna arrangement in a case that the quantity of panels is 4 $(M,N,P,Ng)=(1,1,2,4)$

FIG. 3

a candidate codebook for 4 antenna ports and/or a candidate codebook for 2 antenna ports for the uplink MIMO transmission is determined    S401

panel configuration information for the 8-antenna port multiple-antenna panel for the uplink MIMO transmission is determined    S402

a first candidate codebook is determined from the candidate codebook for 4 antenna ports and the candidate codebook for 2 antenna ports based on the panel configuration information, and a first codeword is determined from the first candidate codebook    S403

a second codeword corresponding to the first codeword is determined    S404

co-phase coefficients and a compensation factor between antenna panels are determined, and the first codeword and the second codeword are concatenated based on the co-phase coefficients and the compensation factor, to obtain the codeword for $L$ layers of the 8-antenna port multiple-antenna panel    S405

FIG. 4

a candidate codebook for 4 antenna ports and a candidate codebook for 2 antenna ports for the uplink MIMO transmission are determined    S501

the first candidate codebook is determined from the candidate codebook for 4 antenna ports and the candidate codebook for 2 antenna ports based on the quantity of the antenna panels    S502

in a case that the transmission coherence is full coherence transmission between the antenna panels, a full coherence codeword from the first candidate codebook is selected as the first codeword, and the second codeword corresponding to the first codeword is determined    S503

co-phase coefficients and a compensation factor between antenna panels are determined, and the first codeword and the second codeword are concatenated based on the co-phase coefficients and the compensation factor, to obtain the codeword for $L$ layers of the 8-antenna port multiple-antenna panel    S504

FIG. 5

| | |
|---|---|
| a candidate codebook for 4 antenna ports and a candidate codebook for 2 antenna ports for the uplink MIMO transmission are determined | S601 |

↓

| | |
|---|---|
| a first candidate codebook is determined from the candidate codebook for 4 antenna ports and the candidate codebook for 2 antenna ports based on a quantity of antenna panels | S602 |

↓

| | |
|---|---|
| in a case that transmission coherence is one of non-coherence transmission between the antenna panels, partial coherence transmission between the antenna panels, or partial coherence transmission between antenna ports in different antenna panels, any codeword in the first candidate codebook is selected as a first codeword | S603 |

↓

| | |
|---|---|
| a second codeword corresponding to the first codeword is determined | S604 |

↓

| | |
|---|---|
| co-phase coefficients and a compensation factor between antenna panels are determined, and the first codeword and the second codeword are concatenated based on the co-phase coefficients and the compensation factor to obtain the codeword for $L$ layers of the 8-antenna port multiple-antenna panel | S605 |

FIG. 6

| | |
|---|---|
| it is determined that transmission coherence is non-coherence transmission between antenna panels | S701 |

↓

| | |
|---|---|
| in a case that a quantity of the antenna panels is 2, it is determined that a first candidate codebook is a candidate codebook for 4 antenna ports | S702 |

↓

| | |
|---|---|
| a first codeword and a second codeword corresponding to the first codeword are determined from the candidate codebook for 4 antenna ports | S703 |

↓

| | |
|---|---|
| in a case that the quantity of the antenna panels is 2, it is determined that the first candidate codebook is a candidate codebook for 2 antenna ports | S704 |

↓

| | |
|---|---|
| a first codeword and a second codeword corresponding to the first codeword are determined from the candidate codebook for 2 antenna ports | S705 |

FIG. 7

in a case that transmission coherence is partial coherence transmission between antenna panels and a quantity of the antenna panels is 4, it is determined that a first candidate codebook is a candidate codebook for 2 antenna ports ⟍ S801

a first codeword and a second codeword corresponding to the first codeword are determined from the candidate codebook for 2 antenna ports ⟍ S802

based on co-phase coefficients and a compensation factor, the first codeword and the second codeword are concatenated to obtain the codeword for $L$ layers of the 8-antenna port multiple-antenna panel ⟍ S803

FIG. 8

in a case that transmission coherence is partial coherence transmission between antenna ports in different antenna panels and a quantity of antenna panels is 2, it is determined that a first candidate codebook is a candidate codebook for 2 antenna ports ⟍ S901

a first codeword and a second codeword corresponding to the first codeword are determined from the candidate codebook for 2 antenna ports ⟍ S902

based on co-phase coefficients and a compensation factor, the first codeword and the second codeword are concatenated to obtain a codeword for $L$ layers of the 8-antenna port multiple-antenna panel ⟍ S903

FIG. 9

precoding matrix indication information is received from a network device ⟍ S1001

based on the TPMI, a target precoding matrix corresponding to uplink transmission is determined from a precoding codebook for $L$ layers of the 8-antenna port multiple-panel corresponding to uplink MIMO transmission ⟍ S1002

a PUSCH is precoded based on the target precoding matrix and then transmitted to the network device ⟍ S1003

FIG. 10

a TPMI is determined, and the TPMI is transmitted to a terminal device to indicate the terminal device to determine a target precoding matrix corresponding to uplink transmission from a precoding codebook for $L$ layers of 8 antenna ports corresponding to uplink MIMO transmission ⟍ S1101

PUSCH transmission from the terminal device is received, where the PUSCH transmission is obtained by precoding by the terminal device based on the target precoding matrix ⟍ S1102

a PUSCH is precoded based on the target precoding matrix and then transmitted to the network device ⟍ S1103

FIG. 11

communication device

reception and transmission module —— 1201

processing module —— 1202

—— 120

FIG. 12

communication device

interface circuit —— 1306

antenna —— 1305

transceiver —— 1304

processor —— 1301

memory —— 1302

computer program —— 1303

—— 130

FIG. 13

chip

processor —— 1401

interface —— 1402

memory —— 1403

—— 140

FIG. 14

## INTERNATIONAL SEARCH REPORT

| International application No. |
|---|
| **PCT/CN2022/109258** |

| A. | CLASSIFICATION OF SUBJECT MATTER |
|---|---|

H04B 7/0452(2017.01)i

According to International Patent Classification (IPC) or to both national classification and IPC

| B. | FIELDS SEARCHED |
|---|---|

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

WPI, EPODOC, CNPAT, CNKI: 码本 码字 天线 面板 配置 相干 端口 MIMO UL codeword codebook antenna panel coherence port

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110036570 A (MEDIATEK INC.) 19 July 2019 (2019-07-19) description, paragraphs [0028]-[0154] | 1-24 |
| A | CN 110535499 A (ZTE CORP.) 03 December 2019 (2019-12-03) entire document | 1-24 |
| A | WO 2018084898 A1 (INTEL CORP.) 11 May 2018 (2018-05-11) entire document | 1-24 |
| A | OPPO. "3GPP TSG RAN WG1 Meeting #90bis R1-1718024" *Remaining Issues on Uplink Codebook Design,* 30 October 2017 (2017-10-30), entire document | 1-24 |
| A | US 2020136692 A1 (ZTE CORP.) 30 April 2020 (2020-04-30) entire document | 1-24 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2022** | **19 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/109258**

| Patent document cited in search report | | | Publication date (day/month/year) | Patent family member(s) | | | Publication date (day/month/year) |
|---|---|---|---|---|---|---|---|
| CN | 110036570 | A | 19 July 2019 | TW | 201921860 | A | 01 June 2019 |
| | | | | WO | 2019052479 | A1 | 21 March 2019 |
| | | | | US | 2019081671 | A1 | 14 March 2019 |
| | | | | US | 2019081667 | A1 | 14 March 2019 |
| | | | | WO | 2019052480 | A1 | 21 March 2019 |
| | | | | WO | 2019052484 | A1 | 21 March 2019 |
| | | | | WO | 2019052486 | A1 | 21 March 2019 |
| | | | | TW | 201921859 | A | 01 June 2019 |
| | | | | CN | 110024302 | A | 16 July 2019 |
| | | | | CN | 110063074 | A | 26 July 2019 |
| | | | | CN | 111095839 | A | 01 May 2020 |
| CN | 110535499 | A | 03 December 2019 | US | 2022094404 | A1 | 24 March 2022 |
| | | | | EP | 3910808 | A1 | 17 November 2021 |
| | | | | CA | 3126301 | A1 | 16 July 2020 |
| | | | | WO | 2020143733 | A1 | 16 July 2020 |
| | | | | VN | 82065 | A | 25 November 2021 |
| WO | 2018084898 | A1 | 11 May 2018 | None | | | |
| US | 2020136692 | A1 | 30 April 2020 | WO | 2018206016 | A1 | 15 November 2018 |
| | | | | CN | 108111206 | A | 01 June 2018 |

Form PCT/ISA/210 (patent family annex) (January 2015)